# EUROPÄISCHE PATENTSCHRIFT

(11) **EP 3 378 581 B1**
(45) Veröffentlichungstag und Bekanntmachung des Hinweises auf die Patenterteilung: **29.01.2020**
(21) Anmeldenummer: 18162048.5
(22) Anmeldetag: 15.03.2018
(51) Int. Cl.: B21J 15/02, B21J 15/10, B21J 15/20, B21J 15/26, B21J 15/28, F15B 11/02

(54) **MEHRSTUFIGE FÜGEVORRICHTUNG UND FÜGEVERFAHREN DAFÜR**
MULTI-STAGE JOINING DEVICE AND JOINING METHOD THEREFOR
DISPOSITIF D'ASSEMBLAGE EN PLUSIEURS ÉTAPES ET PROCÉDÉ D'ASSEMBLAGE CORRESPONDANT

(30) Priorität: 24.03.2017 DE 102017106449
(43) Veröffentlichungstag der Anmeldung: 26.09.2018
(73) Patentinhaber: Böllhoff Verbindungstechnik GmbH, 33649 Bielefeld (DE)
(72) Erfinder: Draht, Torsten, 33758 Schloß Holte-Stukenbrock (DE); Kleinemeier, Andre, 33415 Verl (DE)
(74) Vertreter: HWP Intellectual Property

(56) Entgegenhaltungen:
- EP-A1- 0 439 433
- EP-A2- 0 288 719
- DE-A1-102014 200 962

## Beschreibung

### 1. Gebiet der Erfindung

Die vorliegende Erfindung betrifft eine Fügevorrichtung, insbesondere ein Stanznietsetzgerät, eine Clinchvorrichtung oder ein Bolzensetzgerät, die eine zumindest zweistufig arbeitende Antriebseinheit in Form eines einheitlich handhabbaren Moduls umfasst. Des Weiteren betrifft vorliegende Erfindung ein für die beschriebene Fügevorrichtung vorgesehenes Fügeverfahren.

### 2. Hintergrund der Erfindung

In der Praxis sind hydraulisch angetriebene Werkzeuge, wie beispielsweise Fügewerkzeuge, weit verbreitet. Diese bestehen beispielsweise aus einem über einen Hydraulikzylinder angetriebenen Setzstempel, der mit Hilfe von Schläuchen mit einer entfernt angeordneten Hydraulikquelle verbunden ist. Neben dem Platzbedarf für die Hydraulikquelle sorgen gerade die langen Hydraulikschläuche für schlechte Wirkungsgrade, unerwünschte Störungen oder Behinderungen beim Arbeitsprozess.

Zur Vermeidung des apparativen Aufwands durch Hydraulikschläuche und die Hydraulikquelle sind zunehmend Antriebsmodule gefragt, die eine einheitlich handhabbare Einheit bilden. Diese einheitlich handhabbaren Module sind elektrisch oder elektrohydraulisch angetrieben, wie es beispielsweise in der gattungsgemäßen DE 10 2014 200 962 A1 und in DE 11 2005 002 804 B4 beschrieben ist.

DE 10 2014 200 962 A1 nutzt zwei koaxial angeordnete Spindeln, die mithilfe eines Elektromotors geradlinig versetzt werden. Ein Differenzialgetriebe überträgt die Bewegung des Elektromotors gezielt auf die eine oder die andere Spindel. Das Differenzialgetriebe wandelt die Bewegung des Elektromotors derart um, dass die erste Spindel und somit der Stempel in einer Bewegungsstufe schnell und mit wenig Kraft an die Fügestelle bewegt wird. Über die zweite Spindel und das umgeschaltete Differenzialgetriebe wird der Stempel in einer Kraftstufe bewegt. Das bedeutet, dass mit dem Stempel eine höhere Kraft als in der Bewegungsstufe aufbringbar ist. Dafür ist mit dem Stempel aber nur ein kürzerer Weg pro Zeiteinheit als in der Bewegungsstufe zurücklegbar. Es ist ebenfalls offenbart, die beiden Spindeln alternativ mit unterschiedlichen Antrieben zu bewegen.

Das einheitlich handhabbare Hydraulikaggregat der DE 11 2005 002 804 B4 kombiniert zwei Hydraulikpumpen, einen Hydraulikspeicher und einen Ventilblock. Diese erzeugen in Abhängigkeit vom jeweiligen Anwendungsfall einen Niederdruck- oder einen Hochdruck-Teilstrom der Hydraulikflüssigkeit, um einen angeschlossenen Hydraulikzylinder eines Blindnietsetzgeräts zu betreiben. Der Niederdruck-Teilstrom stellt einen hohen Volumenstrom mit niedriger Kraftkapazität bereit, sodass der Stempel schnell über große Stempelwege verfahrbar ist. Der Hochdruck-Teilstrom stellt einen niedrigen Volumenstrom mit hoher Kraftkapazität bereit, sodass bei kurzen Stempelwegen hohe Stempelkräfte verglichen zum Niederdruck-Teilstrom realisierbar sind.

Die mehrstufig arbeitenden und einheitlich handhabbaren Antriebseinheiten sind mit vorliegender Ausstattung nicht effizient betreibbar. Ein Nachteil wirkt sich gerade in der Umschaltung zwischen der Bewegungsstufe, beispielsweise der Stufe mit hydraulischem Niederdruck-Teilstrom, und der Kraftstufe, beispielsweise der Stufe mit hydraulischem Hochdruck-Teilstrom, aus. Da der Umschaltpunkt nicht genau definiert ist, führt sowohl ein verfrühtes wie auch ein verspätetes Umschalten von der Bewegungsstufe auf die Kraftstufe zu einer unwirtschaftlichen Verzögerung des Fügevorgangs. Bei einem verfrühten Umschalten ist ein noch zu absolvierender Stempelweg nur mit niedriger Geschwindigkeit des Stempels zurückzulegen. Dies verzögert den Fügevorgang. Wird zu spät auf die Kraftstufe umgeschaltet, versucht der Stempel bereits die Bauteile zu verbinden, ohne dazu aber die erforderliche Kraft aufbringen zu können. Dies führt ebenfalls zu einer ungewollten Verzögerung des Fügevorgangs.

Es ist daher die Aufgabe vorliegender Erfindung, eine Fügevorrichtung und ein Fügeverfahren bereitzustellen, mit dem bekannte Fügevorgänge effektiver steuerbar und somit durchführbar sind.

### 3. Zusammenfassung der Erfindung

Die obige Aufgabe wird durch eine Fügevorrichtung gemäß dem unabhängigen Patentanspruch 1 sowie durch ein Fügeverfahren gemäß dem unabhängigen Patentanspruch 10 gelöst. Vorteilhafte Ausgestaltungen und Weiterentwicklungen vorliegender Erfindung gehen aus den abhängigen Patentansprüchen, der Beschreibung und den begleitenden Zeichnungen hervor.

Die erfindungsgemäße Fügevorrichtung, insbesondere ein Stanznietsetzgerät, eine Clinchvorrichtung oder ein Bolzensetzgerät, umfasst einen Stempel, mit dem eine geradlinige, nicht drehende Setzbewegung ausführbar ist, einen Niederhalter, mit dem in einer Fügerichtung ein oder mehrere Bauteile komprimierbar sind, und eine zumindest zweistufig arbeitende Antriebseinheit, mit der der Stempel und der Niederhalter bewegbar und die in Abhängigkeit von einer durch den Stempel und/oder Niederhalter aufbringbaren Kraft und/oder in Abhängigkeit von einem realisierbaren Stempelweg und/oder Niederhalterweg und/oder in Abhängigkeit von einer Fügezeit und/oder eines elektrischen Motorstroms der Pumpe umschaltbar ist. Die zumindest zweistufig arbeitende Antriebseinheit weist folgende alternative Konfigurationen auf:
a. einen zumindest zweistufigen elektrischen Spindelantrieb, in dem ein Getriebe über mindestens zwei umschaltbare unterschiedliche Übersetzungsstufen oder zwei oder mehr Spindeln unterschiedlicher Gewindesteigung eine Drehbewegung eines Elektromotors in eine geradlinige Setzbewegung des Stempels umwandeln, wobei sich die jeweilige geradlinige Setzbewegung der Übersetzungsstufen in möglichen Stellwegen pro Zeiteinheit und/oder in einer aufbringbaren Stempelkraft unterscheiden und zumindest der Elektromotor, dass umschaltbare Getriebe und der Spindelantrieb ein einheitlich handhabbares Modul bilden,
b. einen zumindest zweistufigen hydraulischen Stempelantrieb mit einem doppelt wirkenden Zylinder mit einer einseitigen Kolbenstange, einem Hydraulikreservoir, einem Elektromotor in Verbindung mit einer ersten und einer zweiten hydraulischen Pumpenstufe und einem Ventilblock, die zusammen ein einheitlich handhabbares Modul bilden, mit dessen erster Stufe im Vergleich zur zweiten Stufe ein hoher Volumenstrom mit einem niedrigen Hydraulikdruck und mit dessen zweiter Stufe ein niedriger Volumenstrom mit einem hohen Hydraulikdruck bereitstellbar ist, oder
c. einen zumindest zweistufigen hydraulischen Stempelantrieb mit einem doppelt wirkenden Zylinder mit einseitiger Kolbenstange, einem Hydraulikreservoir, einem Elektromotor in Verbindung mit einer Hydraulikpumpe und einem Ventilblock, die zusammen ein einheitlich handhabbares Modul bilden, mit dessen Ventilblock der doppelt wirkende Zylinder als Differenzialzylinder betreibbar ist, sodass mit dessen erster Stufe im Vergleich zur zweiten Stufe ein hoher Volumenstrom mit einem niedrigen Hydraulikdruck und mit dessen zweiter Stufe ein niedrigerer Volumenstrom mit einem hohen Hydraulikdruck bereitstellbar ist.

Die erfindungsgemäße Fügevorrichtung umfasst zudem zumindest einen Belastungssensor, so dass eine mechanische Belastung des Stempels und des Niederhalters in Fügerichtung erfassbar ist, insbesondere ein Kraftsensor oder ein Drucksensor für Hydraulikflüssigkeit oder eine Motorstromsensor für den elektrischen Motorstrom der Pumpe oder ein Drucksensor für Druckluft oder ein Motorstromsensor für den Motor der Pumpe, und einen Wegsensor, mit dem ein Stempelweg und/oder ein Niederhalterweg erfassbar ist, und/oder eine Zeiterfassung, sodass eine Fügezeit erfassbar und auswertbar ist. In der erfindungsgemäßen Fügevorrichtung ist der Niederhalter über den Stempel bewegbar, sodass mit dem Belastungssensor eine mechanische Belastung des Niederhalters oder der Bauteile erfassbar ist. Der Niederhalter ist mit mindestens einer ersten Feder über die Bewegung des Stempels gegen das mindestens eine Bauteil vorspannbar, wobei mit zumindest einer Steuereinheit allein, die eine selbstständig schaltende Steuereinheit ist, die aufgrund einer mechanischen Konfiguration belastungsabhängig, vorzugsweise druckabhängig, zwischen den Antriebsstufen der Antriebseinheit umschaltet, oder mit zumindest einer Steuereinheit in Kombination mit dem Belastungssensor ein Erreichen mindestens eines ersten Schwellenwerts der Belastung des Stempels und/oder des Niederhalters erkennbar ist oder mit zumindest einer Steuereinheit allein oder in Kombination mit dem Wegsensor ein Erreichen mindestens eines ersten Schwellenwerts des Stempelwegs oder mit zumindest einer Steuereinheit allein oder in Kombination mit der Zeiterfassung das Erreichen mindestens eines ersten Schwellenwerts der Fügezeit erkennbar ist, woraufhin die zumindest zweistufig arbeitende Antriebseinheit durch die Steuereinheit zwischen Antriebsstufen umschaltbar ist, die zumindest eine Bewegungsstufe und die zumindest eine Kraftstufe umfasst, wobei sich die Bewegungsstufe im Vergleich zur Kraftstufe durch eine höhere Stempelgeschwindigkeit und die Kraftstufe im Vergleich zur Bewegungsstufe durch eine höhere aufbringbare Stempelkraft auszeichnet.

Für einen wirtschaftlichen Betrieb der Fügevorrichtung wird bevorzugt während des Fügevorgangs die Belastung des Stempels in Abhängigkeit vom zurückgelegten Stempelweg und/oder in Abhängigkeit von der verstrichenen Zeit erfasst und ausgewertet. Es ist ebenfalls bevorzugt, einen elektrischen Motorstrom des Servomotors mit einem Stromsensor zu erfassen, der die Pumpe der Antriebseinheit antreibt. Die Stärke des Motorstroms repräsentiert die Belastung des Stempels und des Niederhalters. Basierend auf diesen Daten wird die Qualität der hergestellten Fügeverbindung beurteilt. Zudem werden Anpassungen im Betrieb der Fügevorrichtung vorgenommen, um den Fügungsprozess zu verändern. Dabei beginnt der Fügevorgang bereits im Augenblick des Zustellens des Stempels zu den miteinander zu verbindenden Bauteilen. Entsprechend wird die Fügezeit auch ab dem Beginn des Zustellens gemessen. Dadurch nimmt die Phase des tatsächlichen Einpressens eines Fügeelements in die Bauteile nur einen Bruchteil der insgesamt ermittelten Fügezeit ein. Da der Stempel bevorzugt den Niederhalter während seiner Bewegung mitnimmt, enthält die erfasste Belastung des Stempels auch die Belastung des Niederhalters. In Abhängigkeit von der gewählten Konfiguration der Fügevorrichtung wird die Belastung des Stempels durch eine Stempelkraft, einen Hydraulikdruck im den Stempel antreibenden Hydraulikzylinder oder durch einen Pneumatikdruck in einem den Stempel antreibenden Pneumatikzylinder qualifiziert.

Da gemäß einer bevorzugten Ausführungsform der Fügevorgang der Fügevorrichtung vorzugsweise permanent oder zeitweise über die Größen Belastung, Stempelweg und/oder Zeit überwacht und ausgewertet wird, sind anhand einer Belastungs-Stempelweg-Kurve oder anhand einer Belastungs-Zeit-Kurve mindestens ein erster Schwellenwert oder Grenzwert der Belastung des Stempels und/oder des Niederhalters definierbar und erkennbar, an dem ein Umschalten zwischen den möglichen Stufen der Antriebseinheit erfolgen muss. Entsprechend ist bevorzugt eine zentrale Steuereinheit vorgesehen, die in Kombination eines oder einer Auswahl der vorhandenen Sensoren der Fügevorrichtung arbeitet. Die zentrale Steuereinheit empfängt dazu die Signale und Daten der Sensoren, wertet sie aus und sendet darauf aufbauende elektrische Steuersignale an die Fügevorrichtung. Um diese Funktionalität zu realisieren, ist die zentrale Steuereinheit derart konfiguriert, dass ein vordefinierter Schwellenwert bzw. ein Grenzwert der Belastung des Stempels in Zusammenhang steht mit einem Stadium des zu realisierenden Fügevorgangs, an dem der Stempel nun mit Hilfe der Arbeitsstufe ausreichend hohe Stempelkräfte anstelle hoher Verfahrgeschwindigkeiten in der Bewegungsstufe realisieren muss. Je nach zu erfüllender Fügeaufgabe sind derartige Schwellenwerte gezielt definierbar und innerhalb der Steuereinheit abrufbar hinterlegbar. Das für die Definition und die Anwendung von Schwellenwerten im Hinblick auf die Belastung der Fügevorrichtung gesagte gilt in gleicher Weise für die Definition und Anwendung von Schwellenwerten des Stempelwegs und der Fügezeit. Somit wertet die Steuereinheit die erhaltenen Steuerdaten aus, beispielsweise in einer Belastungs-Stempelweg-Kurve oder in einer Belastungs-Fügezeit-Kurve. Sofern das Überschreiten von Grenzwerten erkannt wird, schaltet ein entsprechendes elektrisches Signal der Steuereinheit die Antriebseinheit zwischen unterschiedlichen Antriebsstufen um.

In gleicher Weise ist es alternativ bevorzugt, die Fügevorrichtung mit mindestens einer mechanisch integrierten Steuereinheit und/oder einer elektronisch integrierten Steuereinheit auszustatten und zu betreiben. Entsprechend sind die Schwellenwerte rein mechanisch oder elektronisch und nicht veränderbar in dieser mindestens einen Steuereinheit mechanisch konstruktiv oder elektronisch schaltungstechnisch festgelegt. Bezugnehmend auf eine hydraulisch betriebene Antriebseinheit wird die Steuereinheit durch einen hydraulisch betriebenen und rein mechanisch aufgebauten Umschalter oder ein Umschaltventil betrieben. Der Umschalter oder das Umschaltventil enthält einen federvorgespannten Stößel, der gegen den Hydraulikdruck des Hydraulikzylinders der Antriebseinheit federvorgespannt ist. Die Federvorspannung definiert bevorzugt einen Druckschwellenwert, also einen Schwellenwert der Belastung. Bei abgestufter Federvorspannung werden dadurch bevorzugt mehrere Druckschwellenwerte festgelegt.

Sollte die durch den Hydraulikdruck auf den Stößel ausgeübte Kraft die Gegenkraft der Federvorspannung übersteigen, geht der Stößel in eine andere Schaltposition über. Diese schaltet die Antriebseinheit in eine andere Antriebsstufe um. Vorzugsweise wird durch den Umschalter oder das Umschaltventil zwischen Hydraulikpumpen umgeschaltet oder eine Differenzialschaltung (siehe unten) aktiviert oder deaktiviert oder es können auch unterschiedliche Leistungsstufen einer Hydraulikpumpe gezielt aktiviert werden.

Bei einer elektronischen Antriebseinheit ist bevorzugt stempelkraftabhängig oder stempelwegabhängig eine Umschaltung zwischen Getriebestufen oder unterschiedlichen Spindeln realisiert. Im Hinblick auf den Stempelweg sind bevorzugt definierte Stempelwegpositionen durch mechanische oder elektrische Markierungen definierbar und erkennbar, beispielsweise durch Berührungsschalter, Hall-Sensoren oder Magnetschalter. Ausgewählte Markierungen lösen dann in Abhängigkeit vom zurückgelegten Stempelweg eine Umschaltung zwischen Antriebsstufen der Antriebseinheit aus. Analog kann man in Bezug auf die Fügezeit vorgehen. Somit bedarf es in diesem Zusammenhang nicht der Erfassung und Auswertung der Belastungs-Stempelweg- oder Fügedaten, da die Umschaltung fest vorkonfiguriert ist.

Nichtsdestotrotz ist es bevorzugt, eine zusätzliche zentrale Steuereinheit zur Überwachung und Auswertung von durch Sensoren erhaltenen Fügedaten vorzusehen. Diese zusätzliche Steuereinheit dient dann bevorzugt der Sicherung der Fügequalität.

In der obigen Konfiguration sind vorzugsweise die belastungsabhängigen und/oder die stempelwegabhängigen und/oder die fügezeitabhängigen Schwellenwerte, die man auch als Umschaltpunkte bezeichnen kann, voreingestellt.

In gleicher Weise schaltet bevorzugt ein Wegsensor bei Überschreiten oder Unterschreiten eines bestimmten Stempelwegs und/oder Niederhalterwegs selbständig zwischen der Bewegungsstufe und der Kraftstufe um. Bei dieser Art der Umschaltung wird vorzugsweise eine Länge eines zu verarbeitenden Fügeelements, beispielsweise ein Stanzniet, berücksichtigt und die Arbeitsweise der Fügevorrichtung darauf abgestimmt. Im Hinblick auf die erfasste Fügezeit sind ebenfalls zeitliche Umschaltpunkte fest definierbar.

Daher ist analog zu mindestens einem ersten Schwellenwert der Belastung des Stempels ergänzend oder alternativ mindestens ein erster Schwellenwert des Stempelwegs in der Steuereinheit hinterlegbar und von dort zum Zweck der Auswertung eines Fügevorgangs anwendbar. Somit gewährleistet ein hinterlegter erster Schwellenwert der Belastung in gleicher Weise wie ein hinterlegter erster Schwellenwert des Stempelwegs oder der Fügezeit eine rechtzeitige und effektive Umschaltung von der Bewegungsstufe der Antriebseinheit auf die Kraftstufe der Antriebseinheit. Es ist ebenfalls bevorzugt, den ersten Schwellenwert der Belastung in Kombination mit dem ersten Schwellenwert des Stempelwegs einzusetzen. Sofern diese Schwellenwerte allein oder in Kombination nicht über eine zentrale Steuereinheit ausgewertet werden, sind sie als fest definierte Umschalteinheiten in die Fügevorrichtung integrierbar (siehe oben).

Der Niederhalter, der in Kombination mit den oben genannten unterschiedlichen Konfigurationen der Antriebseinheit verwendet wird, umfasst zumindest eine Feder, um den Niederhalter gegen die zu verbindenden Bauteile vorzuspannen. Da vorzugsweise die Federkonstante der verwendeten Niederhalter-Feder bekannt ist, ergibt sich ein charakteristischer Verlauf der Belastungs-Stempelweg-Kurve oder der Belastung-Zeit-Kurve während des durch die Fügevorrichtung realisierten Fügevorgangs. Damit durch die zentrale Steuereinheit der Fügevorrichtung vorzugsweise diese erfasste Kurve bzw. diese erfassten Daten auswertbar sind, sind mit der Steuereinheit charakteristische Schwellenwerte in diesen erfassten Kurven erkennbar und zum Zweck der Umschaltung zwischen der mindestens einen Bewegungsstufe und der mindestens einen Arbeitsstufe der Fügevorrichtung anwendbar. Dazu werden dann elektrische Steuersignale zur Umschaltung an die Antriebseinheit übermittelt.

Entsprechend ist es bevorzugt, dass mit Hilfe der zentralen Steuereinheit innerhalb der Fügevorrichtung eine Belastungszunahme mit einem konstanten Anstieg erfassbar ist, in deren Verlauf der erste Schwellenwert der Belastung definiert ist. Dieser konstante Anstieg bei der Belastungszunahme wird gezielt durch die mindestens eine erste Feder des Niederhalters hervorgerufen. Anhand des konstanten Anstiegs ist zudem vorzugsweise über den ebenfalls erfassten Stempelweg erkennbar, ab wann, d.h. bevorzugt ab welcher Belastung bzw. Stempelkraft, ab welchem Stempelweg und/oder ab welcher Fügezeit, eine Verbindung in den Bauteilen hergestellt wird und vorzugsweise wann sie fertiggestellt ist. Daher ist es ebenfalls bevorzugt, neben der ersten Feder des Niederhalters noch mindestens eine weitere Feder mit einer anderen Federkonstante als die erste Feder zu verwenden, sodass der tatsächliche Beginn des Verbindungsvorgangs der Bauteile als Phase des Fügevorgangs noch genauer identifizierbar ist.

Wie bereits oben erwähnt worden ist, ist mit der zentralen Steuereinheit der Fügevorrichtung bevorzugt die Belastungszunahme in Abhängigkeit vom Stempelweg oder von der Fügezeit auswertbar. Dabei wird die Belastung als eine Stempelkraft, als ein Hydraulikdruck, als ein Motorstrom der Pumpe oder als ein Pneumatikdruck erfasst und an die Steuereinheit weitergegeben.

Gemäß einer weiteren bevorzugten Ausführungsform der erfindungsgemäßen Fügevorrichtung ist mit der Steuereinheit in der Belastungszunahme eine Änderung von einem ersten positiven konstanten Anstieg auf einen zweiten positiven Anstieg erfassbar, wobei der erste Anstieg kleiner ist als der zweite Anstieg. Basierend auf der Anstiegszunahme ist die Antriebseinheit von der mindestens einen Bewegungsstufe auf die mindestens eine Kraftstufe gezielt umschaltbar. Während der erste positive konstante Anstieg in der Belastungszunahme vorzugsweise die Wirkung der Feder des Niederhalters charakterisiert, zeigt eine Änderung des Anstiegs und somit ein zweiter Anstieg an, dass der Niederhalter nun mithilfe einer zweiten Feder die Bauteile vorspannt oder dass der Verbindungsvorgang, beispielsweise durch Eintreiben eines Stanzniets in die Bauteile, begonnen hat. Beide Stadien des Fügevorgangs werden durch einen zweiten Anstieg in der Belastungs-Stempelweg-Kurve und/oder der Belastungs-Fügezeit-Kurve durch einen Anstieg charakterisiert, der größer ist als der erste Anstieg innerhalb dieser Kurve. Sofern diese Umschaltpunkte mithilfe der Steuereinheit automatisch erkennbar sind, realisiert die Steuereinheit mit Hilfe elektronischer Schaltsignale während des Fügevorgangs darauf aufbauend ein effizientes Umschalten, beispielsweise von der Bewegungsstufe auf die Kraftstufe, der Antriebseinheit der Fügevorrichtung oder von einer ersten Bewegungsstufe auf eine zweite Bewegungsstufe.

Gemäß einer weiteren bevorzugten Ausführungsform vorliegender Erfindung umfasst der Niederhalter der Fügevorrichtung eine zweite Feder, mit der der Stempel gegen die Bauteile vorspannbar ist und die eine größere Federkonstante als die erste Feder aufweist. Entsprechend ergibt sich dann der bereits oben diskutierte Verlauf in der erfassten und von der Steuereinheit ausgewerteten Belastungs-Stempelweg-Kurve oder der Belastungs-Zeit-Kurve.

Zudem ist es ebenfalls bevorzugt, dass eine mechanisch integrierte bzw. vorkonfigurierte Steuereinheit selbständig die Belastungszunahme aufgrund der zweiten Feder erkennt und entsprechend im Fügevorgang die Antriebseinheit umschaltet.

Des Weiteren umfasst die Fügevorrichtung die bereits oben diskutierte selbstständig schaltende und mechanisch oder elektronisch integrierte Steuereinheit. Diese selbstständig schaltende Steuereinheit schaltet aufgrund einer mechanischen oder elektrischen Konfiguration belastungsabhängig, vorzugsweise druckabhängig, oder wegabhängig zwischen den Antriebsstufen der Antriebseinheit um. Aufgrund der mechanisch oder elektrisch erfolgten Vorkonfiguration der selbstständig schaltenden Steuereinheit ist es nicht erforderlich, dass die Steuereinheit elektrische Steuersignale an die Antriebseinheit oder andere Komponenten der Fügevorrichtung übermittelt. Stattdessen findet direkt in der mechanisch vorkonfigurierten oder elektrisch vorkonfigurierten Steuereinheit eine Umschaltung der Antriebsstufen der Antriebseinheit in Abhängigkeit von den sich ändernden Fügeparametern, wie beispielsweise Belastung oder Stempelweg oder Fügezeit, statt. Mit diesem alternativen Aufbau der Fügevorrichtung wird eine robuste Konstruktion bereitgestellt, deren Wartungsaufwand ebenfalls geringer ist als bei der Nutzung einer zentralen Steuereinheit (siehe oben).

Gemäß einer weiteren bevorzugten Ausführungsform vorliegender Erfindung ist die erfindungsgemäße Fügevorrichtung als Stanznietsetzgerät vorgesehen. Dieses Stanznietsetzgerät weist den zumindest zweistufigen hydraulischen Stempelantrieb als Antriebseinheit auf. Des Weiteren umfasst diese Fügevorrichtung das oben beschriebene mechanisch voreingestellte Umschaltventil als vorkonfigurierte Steuereinheit für die Umschaltung der Antriebseinheit zwischen Bewegungs- und Kraftstufe. Dieses Umschaltventil bzw. diese Art der Steuereinheit schaltet druckabhängig von der Bewegungsstufe in die Kraftstufe und umgekehrt.

Vorliegende Erfindung offenbart zudem ein Fügeverfahren einer Fügevorrichtung, insbesondere eine Fügevorrichtung gemäß einer der oben beschriebenen Ausführungsformen, in dem mit einem Stempel eine geradlinige, nicht drehende Setzbewegung ausgeführt, mit einem Niederhalter in einer Fügerichtung ein oder mehrere Bauteile komprimiert und eine zumindest zweistufig arbeitende Antriebseinheit, mit der der Stempel und der Niederhalter bewegbar sind, im Hinblick auf eine durch den Stempel und/oder den Niederhalter aufbringbaren Kraft und/oder im Hinblick auf einen realisierbaren Stempelweg und/oder in Abhängigkeit von einer Fügezeit umgeschaltet wird. Die Antriebseinheit weist die folgenden Merkmale auf:
a. einen zumindest zweistufigen elektrischen Spindelantrieb, in dem ein Getriebe über mindestens zwei umschaltbare unterschiedliche Übersetzungsstufen oder zwei Spindeln unterschiedlicher Gewindesteigung eine Drehbewegung eines Elektromotors in eine geradlinige Setzbewegung des Stempels umwandeln, wobei sich die jeweilige geradlinige Setzbewegung der Übersetzungsstufen in möglichen Stellwegen pro Zeiteinheit und/oder in einer aufbringbaren Stempelkraft unterscheiden und zumindest der Elektromotor, das umschaltbare Getriebe und der Spindelantrieb ein einheitlich handhabbares Modul bilden, oder
b. einen zumindest zweistufigen hydraulischen Stempelantrieb mit einem doppelt wirkenden Zylinder mit einseitiger Kolbenstange, einem Hydraulikreservoir, einem Elektromotor in Verbindung mit einer ersten und einer zweiten hydraulischen Pumpenstufe und einem Ventilblock, die zusammen ein einheitlich handhabbares Modul bilden, mit dessen erster Stufe im Vergleich zur zweiten Stufe ein hoher Volumenstrom mit einem niedrigen Hydraulikdruck und mit dessen zweiter Stufe ein niedriger Volumenstrom mit einem hohen Hydraulikdruck bereitstellbar ist, oder
c. einen zumindest zweistufigen hydraulischen Stempelantrieb mit einem doppelt wirkenden Zylinder mit einseitiger Kolbenstange, einem Hydraulikreservoir, einem Elektromotor in Verbindung mit einer Hydraulikpumpe und einem Ventilblock, die zusammen ein einheitlich handhabbares Modul bilden, mit dessen Ventilblock der doppelt wirkende Zylinder als Differenzialzylinder betreibbar ist, sodass mit dessen erster Stufe im Vergleich zur zweiten Stufe ein hoher Volumenstrom mit einem niedrigen Hydraulikdruck und mit dessen zweiter Stufe ein niedrigerer Volumenstrom mit einem hohen Hydraulikdruck bereitstellbar ist, wobei
mit zumindest einem Belastungssensor eine mechanische Belastung des Stempels und/oder des Niederhalters in Fügerichtung erfasst, insbesondere ein Kraftsensor oder ein Drucksensor für Hydraulikflüssigkeit oder ein Drucksensor für Druckluft, und mit einem Wegsensor ein Stempelweg und/oder ein Niederhalterweg erfasst und/oder mit einer Zeiterfassung eine Fügezeit erfasst wird, wobei der Niederhalter über den Stempel bewegt wird, sodass mit dem Belastungssensor eine mechanische Belastung des Niederhalters erfasst wird, während der Niederhalter mit mindestens einer ersten Feder über die Bewegung des Stempels gegen das mindestens eine Bauteil gedrückt wird, und mit zumindest einer Steuereinheit allein oder in Kombination mit dem Belastungssensor ein Erreichen mindestens eines ersten Schwellenwerts der Belastung des Stempels und/oder des Niederhalters erfasst wird. Alternativ dazu wird mit einer Steuereinheit allein oder in Kombination mit dem Wegsensor ein Erreichen mindestens eines ersten Schwellenwerts des Stempelwegs und/oder des Niederhalterwegs erkannt. Ebenfalls alternativ dazu wird mit einer Steuereinheit allein oder in Kombination mit der Zeiterfassung ein Erreichen mindestens eines ersten Schwellenwerts der Fügezeit erkannt. Daraufhin wird die zumindest zweistufig arbeitende Antriebseinheit entsprechend durch die Steuereinheit zwischen Antriebsstufen umgeschaltet wird, wobei die Antriebsstufen zumindest eine Bewegungsstufe und zumindest eine Kraftstufe umfassen, in denen sich die Bewegungsstufen im Vergleich zur Kraftstufe durch eine höhere Stempelgeschwindigkeit und die Kraftstufe im Vergleich zur Bewegungsstufe durch eine höhere aufbringbare Stempelkraft auszeichnet.

Das oben beschriebene Fügeverfahren ist darauf gerichtet, eine zwischen Antriebsstufen umschaltbare Antriebseinheit einer Fügevorrichtung effizienter steuern zu können. Zu diesem Zweck nutzt das bevorzugte Fügeverfahren die Auswertung von Belastungsdaten während des Fügevorgangs, die durch die Anwendung eines mit mindestens einer Feder vorgespannten Niederhalters sowie mit einem über die Antriebseinheit bewegten Stempelerzeugt werden. Alternativ zur Belastung ist es bevorzugt, den Fügevorgang in Abhängigkeit von dem erfassten Stempel- oder Niederhalterweg oder in Abhängigkeit von einer abgelaufenen Fügezeit zu steuern. Die Veränderung des Belastungssignals oder die Änderung des Stempelwegs oder auch der Fügezeit geben Aufschluss darüber, wann vorzugsweise das Komprimieren bzw. Setzvorgänge von miteinander zu verbindenden Bauteilen abgeschlossen ist/sind, sodass als nächstes das tatsächliche Verbinden der Bauteile erfolgt. Da für das Komprimieren bzw. Setzen der miteinander zu verbindenden Bauteile die Wirkung des Stempels in der Bewegungsstufe ausreichend ist, muss in dieser Phase des Fügevorgangs noch keine Umschaltung von der Bewegungsstufe auf die Arbeitsstufe der Antriebseinheit erfolgen. Denn erst wenn das Verbinden der Bauteile im Rahmen des Fügevorgangs erfolgt, also beispielsweise ein Stanzniet gesetzt wird oder die Bauteile mittels Clinchen verbunden werden, ist die hohe Stempelkraft der Arbeitsstufe und somit ein vorheriges Umschalten von der Bewegungsstufe auf die Arbeitsstufe innerhalb der Antriebseinheit erforderlich.

Mithilfe dieser koordinierten und auf das tatsächliche Stadium des Fügevorgangs abgestimmten Umschaltung von der mindestens einen Bewegungsstufe auf die mindestens eine Arbeitsstufe der Antriebseinheit wird bevorzugt ein effektiver Ablauf des Fügeverfahrens gewährleistet. Denn auf diese Weise sind unnötige Fügezeiten aufgrund beispielsweise einer zu früh eingestellten Kraftstufe vermeidbar.

Gemäß einer bevorzugten Ausführungsform vorliegender Erfindung erfasst die Steuereinheit allein oder in Kombination mit dem Belastungssensor eine Belastungszunahme mit einem konstanten Anstieg, in deren Verlauf der erste Schwellenwert der Belastung definiert ist. Alternativ dazu ist es bevorzugt, einen ersten Schwellenwert des Stempelwegs oder einen ersten Schwellenwert der Fügezeit festzulegen, um einen Status des Fügevorgangs zu identifizieren. Die genannten ersten Schwellenwerte werden vorzugsweise dazu eingesetzt, um ein zur Vorbereitung des tatsächlichen Verbindungsvorgangs stattfindendes Komprimieren der Bauteile mithilfe des Niederhalters bzw. entsprechende Setzvorgänge der Bauteile zu erkennen. Zudem ist es bevorzugt, über den Schwellenwert des Stempelwegs oder den Schwellenwert der Fügezeit einen Beginn des Verbindungsvorgangs der Bauteile zu identifizieren.

Zu diesem Zweck ist die Steuereinheit gemäß einer Alternative als zentrale Steuereinheit vorgesehen. An diese zentrale Steuereinheit werden die durch die Sensoren ermittelten Fügeparameter übermittelt. Zu diesen Sensoren gehören der Belastungssensor, der Stempelwegsensor und/oder die Fügezeit aus der Zeiterfassung. Die sich daraus ergebenden Fügeparameter sind die Belastung, also Hydraulikdruck oder Stempelkraft oder Pneumatikdruck, der Stempelweg und die Fügezeit, die innerhalb der Steuereinheit ausgewertet werden. Als Ergebnis der Auswertung erhält man die Veränderung der Belastung in Abhängigkeit vom Stempelweg oder von der Fügezeit. Aus diesem Datenverlauf sind in der zentralen Steuereinheit hinterlegte Schwellenwerte ablesbar, sodass die zentrale Steuereinheit entsprechend ein elektronisches Steuersignal an die Antriebseinheit zur Umschaltung zwischen Arbeitsstufen übermittelt.

Alternativ dazu ist es ebenfalls bevorzugt, mindestens eine Steuereinheit mechanisch oder elektrisch vorkonfiguriert in die Fügevorrichtung zu integrieren, wie es oben in Kombination mit der Beschreibung der Fügevorrichtung dargelegt worden ist. Im Hinblick auf die Belastung durch einen Hydraulikzylinder ist es bevorzugt, eine Umschalteinheit für die Antriebsstufen der Antriebseinheit in Zusammenwirkung mit der den Stempel antreibenden Hydraulik als vorkonfigurierte und automatisch schaltende Steuereinheit zu nutzen. Innerhalb der Umschalteinheit ist ein federvorgespannter Stößel vorgesehen, der dem Druck der Hydraulikflüssigkeit zum Antrieb des Stempels ausgesetzt ist. Sobald die durch die Hydraulikflüssigkeit aufgebrachte Kraft auf den Stößel, die bevorzugt auch Stempel und Niederhalter bewegt, eine Federvorspannkraft in entgegengesetzter Richtung des Stößels übersteigt, wird der Umschaltstößel derart ausgelenkt, dass eine Umschaltung innerhalb der Antriebsstufe der Antriebseinheit erfolgt. Für diese Umschaltung ist weder die Auswertung von Sensordaten noch die Übermittlung elektrischer Steuersignale von einer zentralen Steuereinheit und auch nicht eine mechanische Umsetzung elektrischer Steuersignale in der Umschalteinheit erforderlich. Es wird somit eine integrierte vorkonfigurierte Steuereinheit verwendet, die einen Umschaltaufwand für die Antriebsstufen der Antriebseinheit reduziert.

Gemäß einer weiteren bevorzugten Ausführungsform des erfindungsgemäßen Fügeverfahrens erfasst die Steuereinheit allein oder in Kombination mit dem Belastungssensor die Belastungszunahme, in deren Verlauf der erste Schwellenwert der Belastung definiert ist. Bei bevorzugter Erfassung in der zentralen Steuereinheit wird vorzugsweise die Belastung in Abhängigkeit vom Stempelweg oder der Fügezeit ausgewertet. Die bevorzugte zentrale Steuereinheit empfängt und wertet an sie übermittelte Steuerdaten aus. Basierend auf erfolgter Auswertung werden elektronische Steuerdaten an die Antriebseinheit übermittelt.

Im Fall der bevorzugten integrierten und vorkonfigurierten Steuereinheit, ist eine Reaktion auf sich ändernde Fügeparameter, wie Belastung oder Stempelweg oder Fügezeit, in der Fügevorrichtung mechanisch oder elektrisch vorkonfiguriert oder integriert. Dies erfolgt bevorzugt durch ein von Hydraulikdruck im Arbeitszylinder abhängiges Umschalten der Antriebsstufen, ohne dass der Hydraulikdruck absolut erfasst und ausgewertet wird. Vielmehr wird über eine federvorgespannte Umschalteinheit der wirkende Hydraulikdruck als Steuermedium eingesetzt, um die Umschaltung zu realisieren. Des Weiteren ist es bevorzugt, die Belastung als eine Stempelkraft, als einen Hydraulikdruck oder als einen Pneumatikdruck zu erfassen.

In Abhängigkeit von der Konfiguration der verwendeten Antriebseinheit ist die Belastung mithilfe unterschiedlicher Größen bestimmbar. Unabhängig davon, ob der Stempel elektromotorisch, hydraulisch oder pneumatisch angetrieben wird, ist die mechanische Belastung mithilfe der Stempelkraft beschreibbar. Wird der Stempel bevorzugt durch einen hydraulischen Zylinder angetrieben, dann ist ebenfalls der im hydraulischen Zylinder messbare Hydraulikdruck als Referenzgröße für die auf den Stempel wirkende Kraft oder Belastung nutzbar, erfassbar und auswertbar. Das gleiche gilt, wenn der Stempel durch einen pneumatischen Zylinder angetrieben ist.

Gemäß einer weiteren bevorzugten Ausführungsform des erfindungsgemäßen Fügeverfahrens erfasst die Steuereinheit basierend auf den erhaltenen Sensordaten in der Belastungszunahme eine Änderung von einem ersten positiven konstanten Anstieg auf einen zweiten positiven Anstieg, wobei der erste Anstieg kleiner ist als der zweite Anstieg. Basierend auf der erfassten Anstiegszunahme schaltet die Steuereinheit die Antriebseinheit von der mindestens einen Bewegungsstufe auf die mindestens eine Kraftstufe um. Dabei werden bevorzugt elektrische Schaltsignale an die Antriebseinheit übermittelt.

Mithilfe der bevorzugten zentralen Steuereinheit werden bevorzugt die einen Fügevorgang begleitenden und beschreibenden Daten, wie die Belastung und der Stempelweg und/oder die Fügezeit erfasst. Sofern der erste positive konstante Anstieg in der Belastungs-Stempelweg/Fügezeit-Kurve stärker ansteigt, also eine positive Anstiegsänderung erfährt, ist anhand dieser Anstiegsänderung ein Umschaltpunkt zwischen Bewegungsstufe und Kraftstufe identifizierbar. Ein derartiger Umschaltpunkt bzw. eine derartige Anstiegsänderung wird beispielsweise durch den Beginn des tatsächlichen Verbindungsvorgangs der Bauteile, vorzugsweise ein Einpressen eines Stanzniets in die Bauteile, angezeigt. Des Weiteren ist es bevorzugt, dass durch einen derartigen weiteren Anstieg der Belastungskurve die Wirkung einer weiteren Niederhalterfeder signalisiert wird. Zusammenfassend ist aber die beschriebene Anstiegsänderung dazu nutzbar, um ein Umschalten zwischen Bewegungsstufe und Kraftstufe zu initiieren oder vorzubereiten. Das gilt gleichermaßen für die Bewegung des Stempels in Fügerichtung und entgegen der Fügerichtung.

Gemäß einer weiteren bevorzugten Ausgestaltung des erfindungsgemäßen Fügeverfahrens weist der Niederhalter der Fügevorrichtung eine zweite Feder auf, mit der der Niederhalter gegen die Bauteile vorspannbar ist und die eine größere Federkonstante als die erste Feder umfasst. Entsprechend sorgt diese zweite Feder des Niederhalters für die oben diskutierte bevorzugte Anstiegszunahme in der Belastungskurve für den gerade durchgeführten Fügevorgang. Wenn bevorzugt diese zweite Feder mit ihrer größeren Federkonstante nur einen relativ kurzen oder einen bekannten Kompressionsweg aufweist, ist die erfasste Kompression der zweiten Niederhalterfeder ein erfassbares Signal, um die Antriebseinheit von der mindestens einen Bewegungsstufe auf die mindestens eine Kraftstufe umzuschalten. Insofern ist es bevorzugt, in Kombination mit dem Niederhalter eine oder mehrere Federn unterschiedlicher oder gleicher Federkonstante einzusetzen, um anhand der Belastungskurve für den jeweiligen Fügevorgang die Position des Stempels in Bezug auf die miteinander zu verbindenden Bauteile genauer zu identifizieren. Sobald die unterschiedlichen Federkonstanten der eingesetzten Federn im Rahmen der erfassten Belastungskurve auswertbar erkennen lassen, dass die Verbindungsphase im Rahmen des Fügevorgangs bevorsteht, ist dies ein geeigneter Umschaltpunkt von der mindestens einen Bewegungsstufe auf die mindestens eine Kraftstufe der Antriebseinheit.

Daher wird im Rahmen des bevorzugten erfindungsgemäßen Fügeverfahrens der mit der Steuereinheit erfasste zweite positive Anstieg auf die Wirkung der zweiten Feder des Niederhalters zurückgeführt, sofern der erfasste zweite positive Anstieg konstant ist.

Somit nutzt das vorliegende Fügeverfahren in gleicher Weise wie die oben beschriebene Fügevorrichtung mindestens eine selbstständig schaltende Steuereinheit oder aber eine mit Sensordaten versorgte zentrale Steuereinheit, um zwischen Antriebsstufen der Antriebseinheit gezielt umzuschalten. Bevorzugt wird eine zentrale Steuereinheit zusätzlich zu einer selbstständig bzw. automatisch schaltenden Steuereinheit eingesetzt. In diesem Fall dient die zentrale Steuereinheit nicht der Umschaltung der Antriebsstufen sondern der Qualitätskontrolle und weiteren Gestaltung des Fügevorgangs. Die selbstständig schaltende Steuereinheit schaltet aufgrund einer mechanischen Konfiguration belastungsabhängig, insbesondere druckabhängig, oder wegabhängig zwischen den Antriebsstufen der Antriebseinheit um. Die bevorzugte zentrale Steuereinheit erhält Daten von den verbundenen Sensoren, wie beispielsweise die Belastung in Form von Stempelkraft, Hydraulikdruck oder Pneumatikdruck, den Stempelweg und/oder die Fügezeit. Diese Daten werden in Form bekannter Fügekurven, wie beispielsweise eine Kraft-Weg-Kurve oder eine Kraft-Fügezeit-Kurve, ausgewertet und interpretiert. Anhand bestimmter Verlaufsrichtungen dieser Kurven oder auch beim Überschreiten zuvor definierter Schwellenwerte werden entsprechende Umschaltvorgänge der Antriebseinheit ausgelöst. Dazu übermittelt die zentrale Steuereinheit entsprechende elektronische Schaltsignale an die Antriebseinheit, sodass von einer Bewegungsstufe auf die Kraftstufe und umgekehrt umgeschaltet wird.

Gemäß einer weiteren bevorzugten Ausführungsform vorliegender Erfindung wird der oben beschriebene zumindest zweistufige hydraulische Stempelantrieb durch ein mechanisch voreingestelltes Umschaltventil als Steuereinheit umgeschaltet. Das Umschalten findet statt, wenn ein Hydraulikdruck im hydraulischen Stempelantrieb einen Schwellenwert des hydraulischen Arbeitsdrucks erreicht hat. Mithilfe dieser Verfahrensweise wird auf die absolute Erfassung und Auswertung von Fügeparametern verzichtet. Denn innerhalb der Fügevorrichtung erfolgt ein direktes umschalten zwischen den Antriebsstufen der Antriebseinheit, sofern mechanisch definierte bzw. vorkonfiguriert Schwellenwerte oder elektrisch definierte bzw. vorkonfiguriert Schwellenwerte erreicht werden.

### 4. Kurze Beschreibung der begleitenden Zeichnungen

Vorliegende Erfindung wird unter Bezugnahme auf die begleitende Zeichnung näher erläutert. Es zeigen:
- Figur 1: eine bevorzugte Ausführungsform einer Fügevorrichtung mit einem C-Rahmen und einer daran befestigten einheitlich handhabbaren elektromechanischen Antriebseinheit,
- Figur 2: eine bevorzugte Ausführungsform einer Fügevorrichtung mit einem C-Rahmen und einer daran befestigten einheitlich handhabbaren elektrohydraulischen Antriebseinheit mit einer hydraulischen Pumpe und einer Differenzialschaltung des Hydraulikzylinders,
- Figur 3: eine bevorzugte Ausführungsform einer elektrohydraulischen Antriebseinheit mit zumindest zwei hydraulischen Pumpen,
- Figur 4: ein Hydraulikschaltplan des Standes der Technik,
- Figur 5: eine bevorzugte Ausführungsform eines Hydraulikschaltplans vorliegender Erfindung, der eine Differenzialschaltung in Kombination mit einem doppelt wirkenden Hydraulikzylinder und nur einer Hydraulikpumpe nutzt,
- Figur 6: eine schematische Darstellung eines Stempelweg-Fügezeit-Diagramms, in dem die Unterschiede zwischen einer bekannten hydraulischen Antriebseinheit und der erfindungsgemäß bevorzugten hydraulischen Antriebseinheit veranschaulicht werden,
- Figur 7A-D: unterschiedliche Stadien einer erfindungsgemäß bevorzugten Niederhalterkonstruktion während eines Fügevorgangs, insbesondere erläutert anhand eines Setzvorgangs für einen Stanzniet,
- Figur 8: eine bevorzugte Darstellung eines Stempelkraft-Stempelweg-Diagramms, welches die bevorzugte Umschaltung zwischen Antriebsstufen der Antriebseinheit in Abhängigkeit von zumindest einem definierten Schwellenwert veranschaulicht,
- Figur 9: eine weitere bevorzugte Ausführungsform eines Stempelkraft-Stempelweg-Diagramms zur Veranschaulichung einer bevorzugten Umschaltung zwischen Arbeitsstufen der Antriebseinheit basierend auf mindestens einem definierten Schwellenwert,

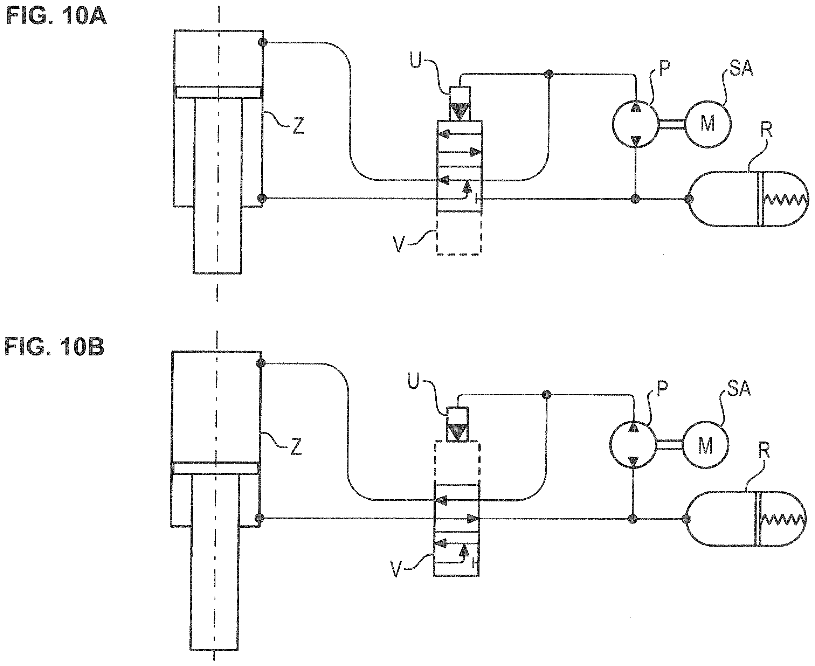

- Figur 10 A, B: eine bevorzugte Ausführungsform eines Hydraulikschaltplans vorliegender Erfindung, der eine Differenzialschaltung in Kombination mit einem doppelt wirkenden Hydraulikzylinder und einer Umschalteinheit zeigt, in denen Figur 11 A die Bewegungsstufe und Figur 11 B die Kraftstufe der elektrohydraulischen Antriebseinheit darstellt,
- Figur 11: ein Flussdiagramm einer bevorzugten Ausführungsform des erfindungsgemäßen Fügeverfahrens.

### 5. Detaillierte Beschreibung der bevorzugten Ausführungsformen

Die vorliegende Erfindung betrifft eine Fügevorrichtung zur Herstellung einer Verbindung zwischen mindestens zwei Bauteilen A oder zum Einbringen eines Füge- oder Funktionselements 1 in mindestens ein Bauteil A. Eine derartige Fügevorrichtung ist ein Setzgerät für Stanzniete, eine Clinchvorrichtung, ein Bolzensetzgerät oder dergleichen. Im Folgenden wird die Fügevorrichtung am bevorzugten Beispiel eines Setzgeräts für Stanzniete beschrieben, da dessen Ausgestaltung analog auf die anderen oben genannten Fügevorrichtungen übertragbar ist.

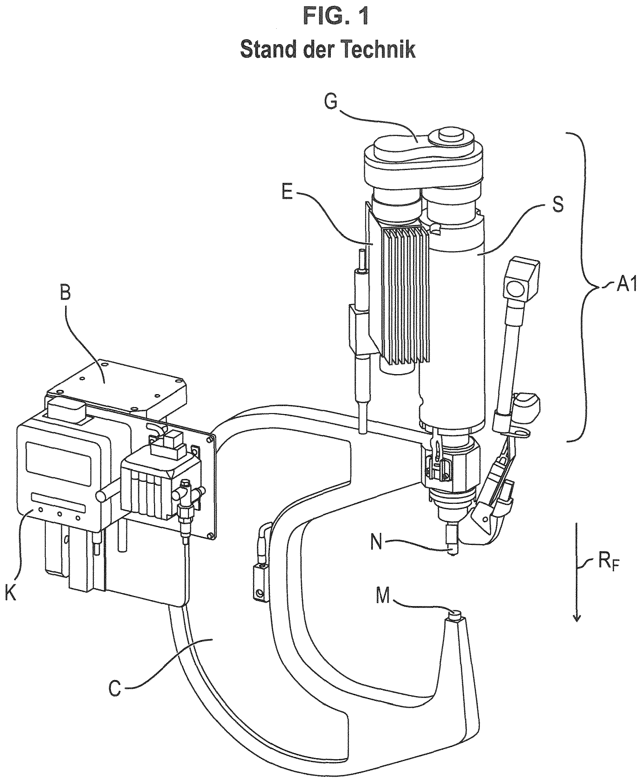

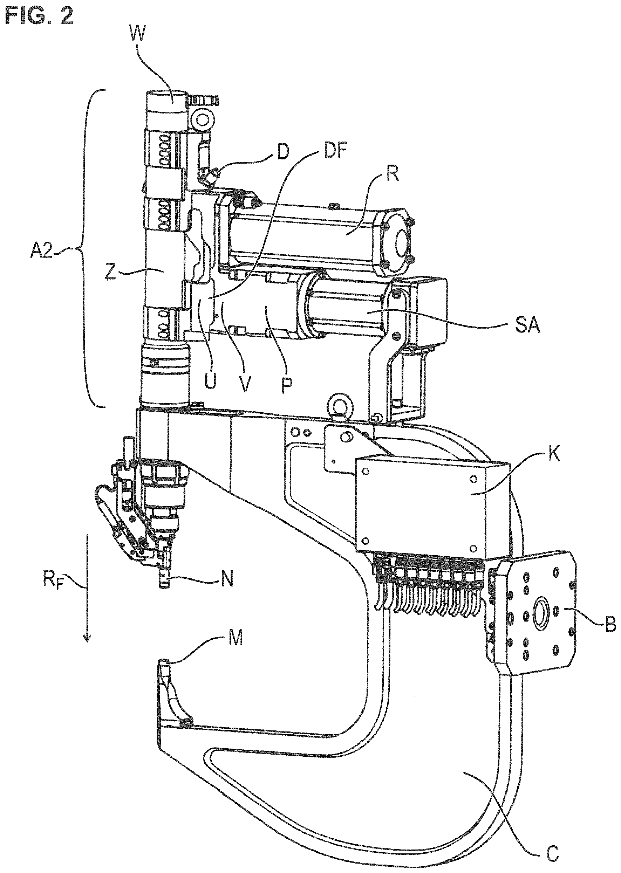

Bevorzugte Ausführungsformen des Setzgeräts sind in den Figuren 1 und 2 dargestellt. Das jeweilige Setzgerät weist einen bekannten C-Rahmen C auf, an dessen gegenüberliegenden Enden eine Matrize M und eine Antriebseinheit A1; A2; A3 angeordnet sind. Die Antriebseinheit A1; A2; A3 stellt ein einheitlich handhabbares Modul dar, welches nahezu unabhängig von seiner Umgebung betrieben werden kann. Nahezu unabhängig bedeutet in diesem Zusammenhang, dass lediglich elektrische Leitungen und Nietzufuhrschläuche zur Antriebseinheit führen, deren mögliches Störpotential für die Fügevorrichtung vernachlässigt werden kann. Im Vergleich zu bekannten hydraulisch betriebenen Setzgeräten bedeutet das, dass keine langen Hydraulikschläuche zum Betrieb der Antriebseinheit A1; A2; A3 erforderlich sind. Zudem muss für die Antriebseinheit A2; A3 keine entfernt angeordnete Hydraulikquelle bereitgestellt werden, da die unten näher erläuterten Antriebseinheiten A2; A3 über ein eigenes Hydraulikreservoir R verfügen. Aufgrund der fehlenden Hydraulikschläuche der entfernt angeordneten Hydraulikquelle weist eine derartige Fügevorrichtung eine geringere Störkontur auf. Zudem ist sie in ihrer Handhabung flexibler und einfacher und mit einem geringeren Platzbedarf verknüpft im Vergleich zu gängigen hydraulisch betriebenen Setzgeräten mit einer externen Hydraulikquelle.

Die bevorzugte Antriebseinheit A1; A2; A3 umfasst unterschiedliche und zueinander umschaltbare Arbeitsstufen. Mithilfe dieser umschaltbaren Arbeitsstufen sind unterschiedliche Betriebsstadien der Antriebseinheit A1; A2; A3 einstellbar, die dem jeweiligen Stadium eines Fügevorgangs zugeordnet sind. Auf diese Weise wird bevorzugt berücksichtigt, dass in bestimmten Stadien des Fügevorgangs eine hohe Stempelgeschwindigkeit zum Zustellen oder Wegbewegen des Stempels nötig ist. In einer anderen Phase des Fügevorgangs wiederum ist eine hohe Stempelkraft erforderlich, da in diesem Stadium ein Fügeelement oder ein bevorzugtes Funktionselement in die Bauteile gesetzt werden muss. Entsprechend ist es gemäß vorliegender Erfindung bevorzugt, dass die einheitlich handhabbare Antriebseinheit A1; A2; A3 mindestens eine Bewegungsstufe und mindestens eine Kraftstufe aufweist. Im Rahmen der Bewegungsstufe ist der Stempel mit hoher Stempelgeschwindigkeit in Fügerichtung R_{F} oder entgegen der Fügerichtung versetzbar. In der bevorzugten Kraftstufe ist bei einer niedrigeren Stempelgeschwindigkeit im Vergleich zur Bewegungsstufe eine hohe Kraft durch den Stempel auf das mindestens eine Bauteil aufbringbar. In diesem Zusammenhang ist es ebenfalls bevorzugt, dass entsprechend der zu realisierenden Fügeaufgabe mehrere Bewegungsstufen mit unterschiedlichen maximal erreichbaren Stempelgeschwindigkeiten und mehrere Kraftstufen mit unterschiedlichen maximal erreichbaren Stempelkräften vorgesehen sind, zwischen denen gezielt umgeschaltet werden kann.

Die bevorzugte Antriebseinheit A1; A2; A3 wird jeweils in Kombination mit einem Niederhaltermodul N eingesetzt. Das Niederhaltermodul N dient dazu, definierte Phasen eines Fügevorgangs zu identifizieren, an denen ein Umschalten zwischen Arbeitsstufen der Antriebseinheit A1; A2; A3 erfolgen muss. Die Konstruktion und die Funktionsweise des Niederhaltermoduls N gerade in Kombination mit der einheitlich handhabbaren Antriebseinheit A1; A2; A3 ist unten näher erläutert.

Um eine bevorzugte mehrstufige Antriebseinheit A1 zu realisieren, umfasst die Fügevorrichtung der Figur 1 einen Elektromotor E, ein mehrstufiges Getriebe G sowie einen Spindelantrieb S. Eine ähnliche Konstruktion ist in DE 10 2014 200 962 und in DE 2010 6 207 U1 beschrieben, die bezüglich der Konstruktion der Antriebseinheit durch Bezugnahme aufgenommen sind. Als weitere bevorzugte Ausführungsform ist auch eine Antriebseinheit mit einem Elektromotor, einem Getriebe und zwei Spindeln unterschiedlicher Gewindesteigung einsetzbar. Diese beiden Spindeln sind bevorzugt ineinander koaxial oder nebeneinander oder übereinander in der Antriebseinheit angeordnet.

Das oben genannte Getriebe der Fügevorrichtung der Figur 1 ist vorzugsweise zumindest zweistufig aufgebaut. Das bedeutet, dass eine Bewegungsstufe mit hoher Spindelgeschwindigkeit und somit Stempelgeschwindigkeit in linearer Richtung bzw. in Fügerichtung vorgesehen ist. Es ist ebenfalls bevorzugt, mehrere Bewegungsstufen zu realisieren. Eine ebenfalls vorgesehene Arbeitsstufe ermöglicht eine geringere Spindel- und dadurch Stempelgeschwindigkeit, während gleichzeitig eine hohe Stempelkraft auf den Stempel und die Bauteile übertragen wird. Daraus folgt, dass bevorzugt die mindestens eine Bewegungsstufe für die Zustellung des Stempels zum Bauteil und für das Entfernen des Stempels vom Bauteil genutzt wird. Nutzt man die Bewegungsstufe zum Einstellen der Position des Stempels während des Fügevorgangs, werden dadurch die Taktzeiten für den Fügevorgang verringert. Die Bewegungsstufe wird umgeschaltet in die mindestens eine Arbeitsstufe, sobald die Phase des tatsächlichen Verbindens während des Fügevorgangs beginnt oder kurz bevor steht. Dieser Zeitpunkt ist der Moment, in dem ein Stanzniet am Bauteil anliegt aber noch nicht in dieses Bauteil eindringt oder beim Clinchen ein Verformen der Bauteile noch nicht begonnen hat.

Die Fügevorrichtung der Figur 1 umfasst zudem den bereits oben erwähnten Niederhalter N (siehe unten), die Matritze M sowie eine bevorzugte zentrale Steuereinheit K. Die zentrale Steuereinheit K sammelt die von Sensoren übermittelten Fügeparameter, wie beispielsweise Belastung, d.h. Stempelkraft, Hydraulikdruck, Stempelweg, Fügezeit und dergleichen, und wertet den Fügevorgang aus. Gemäß einer bevorzugten Ausführungsform vorliegender Erfindung steuert die zentrale Steuereinheit K die Antriebseinheit A2 und das Umschalten zwischen Antriebsstufen zur Gestaltung des Fügevorgangs.

Vorzugsweise werden mithilfe bekannter Sensoren die Stempelkraft und der Stempelweg erfasst. Da zudem vorzugsweise der Niederhalter mithilfe der Stempelbewegung in Richtung der Bauteile bewegt und auf diese aufgesetzt wird, ist auch die durch den Niederhalter aufgebrachte Kraft bevorzugt über die Stempelkraft erfassbar. Es ist ebenfalls bevorzugt, den Niederhalter mit eigenem Antrieb zu bewegen und dessen Belastung individuell zu erfassen.

Figur 1 offenbart ebenfalls ein Kopplungsmodul B, welches am C-Rahmen C befestigt ist. Mithilfe des Kopplungsmoduls B ist die Fügevorrichtung der Figur 1 mit einem Roboterarm koppelbar.

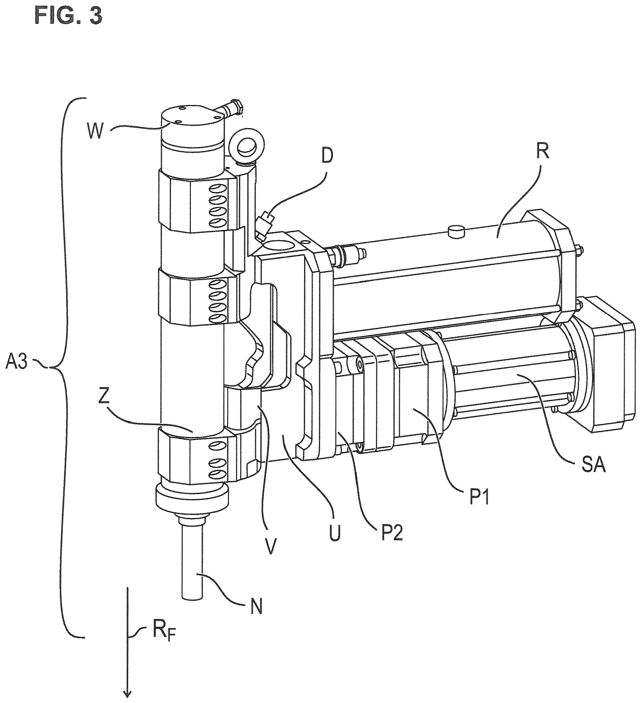

Im Unterschied zur Antriebseinheit A1 der Figur 1 nutzt die Fügevorrichtung der Figur 2 bevorzugt eine hydraulische Antriebseinheit A2. Eine weitere bevorzugte hydraulische Antriebseinheit A3 ist in Figur 3 gemäß ihrer bevorzugten Ausgestaltung dargestellt.

Die genannten hydraulischen Antriebseinheiten A2; A3 sind selbstständig handhabbare Module, die unabhängig von einer entfernt angeordneten Hydraulikquelle und ohne lange Hydraulikschläuche in Verbindung mit dieser Quelle betreibbar sind. Stattdessen umfassen die hydraulischen Antriebseinheiten A2; A3 ein Hydraulikreservoir R, in dem ausreichend Hydraulikflüssigkeit zum Betrieb der Antriebseinheit A2; A3 gespeichert ist.

Zudem umfasst die hydraulische Antriebseinheiten A2; A3 vorzugsweise einen hydraulischen Zylinder Z, vorzugsweise einen doppelt wirkenden Zylinder. Eine Kolbenstange des hydraulischen Zylinders Z wird in bekannter Weise durch den Zustrom und Abstrom von Hydraulikflüssigkeit in linearer Richtung ausgelenkt, wodurch die Stempelbewegung erzeugt wird.

Des Weiteren umfasst die hydraulische Antriebseinheit A2; A3 eine hydraulische Pumpe P. Die durch die hydraulische Pumpe P geförderte Hydraulikflüssigkeit wird über einen Ventilblock V geleitet, um die Volumenströme der Hydraulikflüssigkeit gezielt dem Zylinder zuzuführen oder von diesem abzuführen. Gemäß bevorzugter Ausführungsformen ist die hydraulische Pumpe elektromotorisch angetrieben. Je nach Aufbau und Anwendungsfall weisen mehrere hydraulische Pumpen P1, P2 unterschiedliche Förderleistungen auf, so dass auch mehrere Pumpen in einer hydraulischen Antriebseinheit miteinander kombiniert werden. Weiterhin bevorzugt wird die hydraulische Pumpe durch einen Servomotor SA angetrieben. Der Servomotor SA hat den Vorteil, dass er die Pumpe mit unterschiedlichen Geschwindigkeiten, schrittweise und mit unterschiedlichen Drehrichtungen betreiben kann. Entsprechend erhöht der Servomotor SA die Flexibilität der elektrohydraulischen Antriebseinheit, um auf praktische Situationen reagieren zu können. Erfasst man den Motorstrom des Servomotors, der die Leistungseingabe in die Pumpe repräsentiert, dann ist der Motorstrom als Referenzwert für die durch den Stempel und Niederhalter aufgebrachte Kraft bzw. für die Belastung der Fügevorrichtung anwendbar.

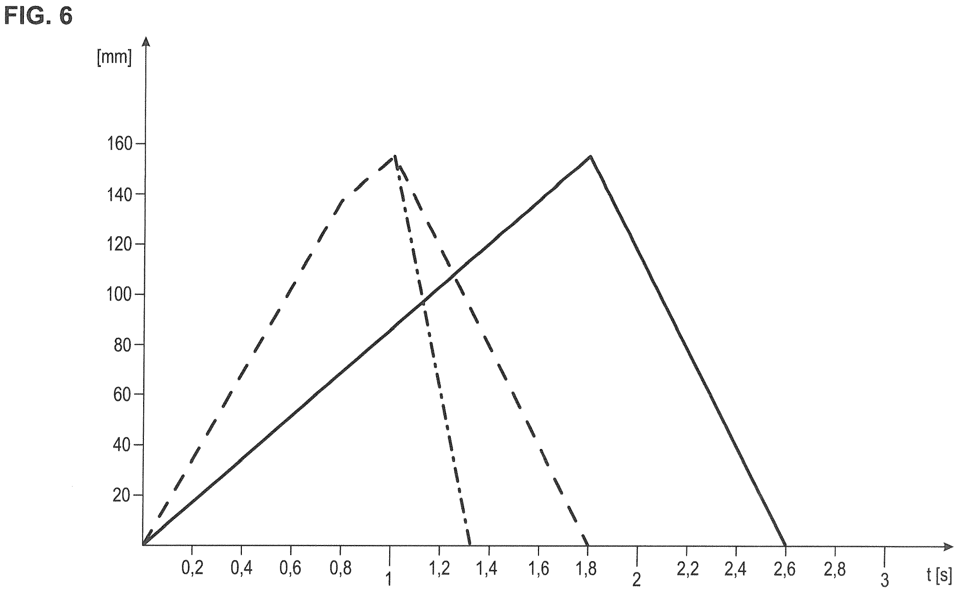

Wie oben bereits erwähnt worden ist, ist der hydraulische Zylinder Z bevorzugt ein doppelt wirkender Zylinder, der gemäß einer bevorzugten Ausführungsform als Differenzialzylinder betrieben wird. Das bedeutet, dass die den doppelt wirkenden Zylinder Z betreibenden Volumenströme basierend auf einer Differenzialschaltung zum Zylinder Z geleitet werden (siehe Figur 6). Bei dem doppelt wirkenden Differenzialzylinder Z ist die Kolbenstange nur in einer Arbeitskammer des Zylinders angeordnet. Wird der Kolben in Fügerichtung R_{F} versetzt, wird Hydraulikflüssigkeit aus der kolbenstangenseitigen Arbeitskammer verdrängt. Mithilfe der Differenzialschaltung wird der verdrängte Volumenstrom aus der kolbenstangenseitigen Arbeitskammer direkt in die Arbeitskammer ohne Kolbenstange umgeleitet, ohne ihn zuvor zum Tank T zu leiten. Dort ergänzt er sich mit dem Volumenstrom, der durch die Hydraulikpumpe P geliefert wird. Aufgrund des auf diese Weise gesteigerten Volumenstroms an Hydraulikflüssigkeit wird der Kolben und der damit verbundene Stempel (nicht gezeigt) schneller in Fügerichtung R_{F} bewegt. Somit dient erfindungsgemäß bevorzugt die Differenzialschaltung in der Bewegungsstufe, um schnellstmöglich, also mit geringem Zeitaufwand, den Stempel zu den Bauteilen A und zuzustellen die passende Position des Stempels zu erreichen.

Es ist ebenfalls bevorzugt, einen Zylinder mit zweiseitiger Kolbenstange (nicht gezeigt) zu nutzen. Darin weisen die beiden Kolbenstangen unterschiedliche Durchmesser auf, wodurch unterschiedlich große Kolbenflächen entstehen. Diese wirken ähnlich wie ein Differenzialzylinder.

Zur Überwachung der Antriebseinheit A2; A3 wird bevorzugt ein Drucksensor D am Zylinder Z angeordnet. Dieser erfasst den Druck der Hydraulikflüssigkeit. Sofern der Zylinder Z in der bevorzugten Differenzialschaltung betrieben wird, ist idealerweise der Druck in beiden Arbeitskammern des Zylinders annähernd gleich groß. Während die durch den Stempel aufgebrachte Kraft mithilfe eines Kraftsensors erfassbar ist, ist es ebenfalls bevorzugt, die durch den Stempel aufgebrachte Kraft aus dem mittels Drucksensor D erfassten Hydraulikdruck abzuleiten.

Es ist weiterhin bevorzugt, die Bewegung der Kolbenstange des Zylinders Z mithilfe eines Wegsensors W zu erfassen. Da die Kolbenstange des Zylinders Z mit dem Stempel der Fügevorrichtung verbunden ist, ist aus dem Weg der Kolbenstange der Stempelweg der Fügevorrichtung ableitbar.

In Abhängigkeit von der zu lösenden Fügeaufgabe werden alle oder nur eine Auswahl der oben genannten Sensoren in Kombination mit der Fügevorrichtung genutzt.

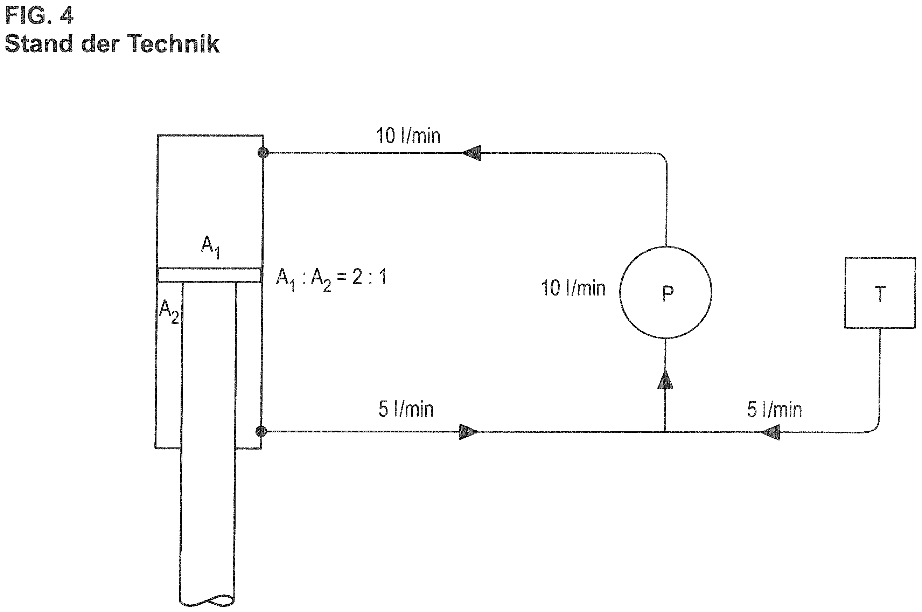

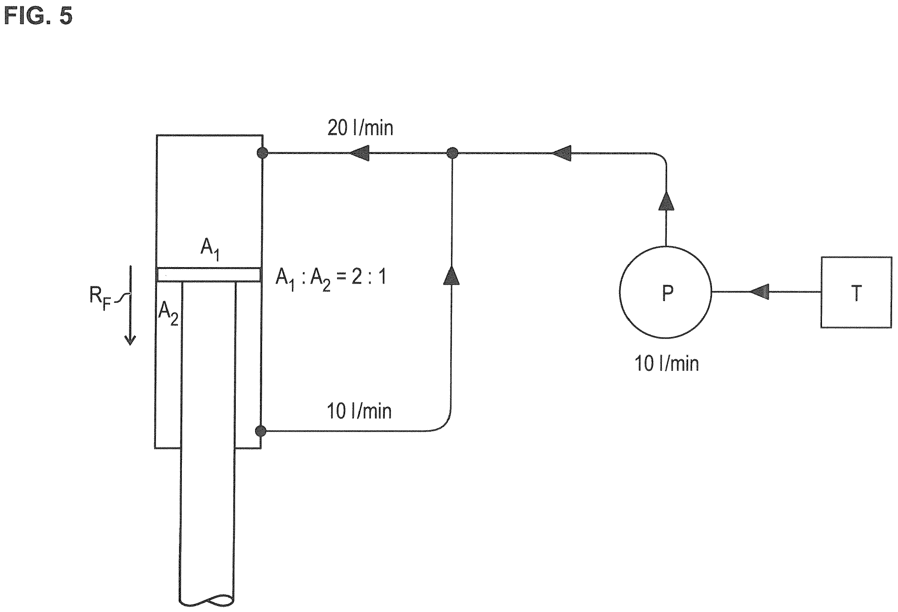

Sofern der Hydraulikzylinder Z nicht mit einer Differenzialschaltung DF (siehe Figur 4), sondern nur mit einer Hydraulikpumpe P betrieben wird, bewegen sich die Volumenströme der Hydraulikflüssigkeit gemäß der schematischen Darstellung in Figur 5. In Figur 4 ist der doppelt wirkende Zylinder Z gezeigt. Da sich die Kolbenstange nur in eine Arbeitskammer erstreckt, weist der Kolben zwei unterschiedlich große Kolbenflächen A1 und A2 auf. Die Kolbenflächen A1 und A2 haben gemäß einer bevorzugten Ausgestaltung ein Größenverhältnis von 2:1. Die Pumpe P fördert Hydraulikflüssigkeit aus dem Tank T in die kolbenstangenabgewandte Arbeitskammer des doppelt wirkenden Zylinders Z. Da die beiden Arbeitskammern des doppeltwirkenden Zylinders nur über die Pumpe P miteinander verbunden sind und die Pumpe P ein maximales Fördervolumen von 10 l/min aufweist, ist dadurch die Verstellgeschwindigkeit des Kolbens limitiert.

Figur 5 zeigt eine schematische Darstellung des doppeltwirkenden Zylinders in einer Differenzialschaltung. In dieser Differenzialschaltung sind in gleicher Weise wie in Figur 4 die Pumpe P und der Tank mit Hydraulikflüssigkeit T vorgesehen. Auch hier hat die Pumpe ein maximales Fördervolumen von 10 l/min. Im Unterschied zur Schaltung der Figur 4 ist in der Figur 5 die kolbenstangenseitige Arbeitskammer mit der oberen kolbenstangenlosen Arbeitskammer verbunden. Das bedeutet, dass bei dem Verfahren des Kolbens in Fügerichtung R_{F} Hydraulik aus der kolbenstangenseitigen Arbeitskammer verdrängt und in die kolbenstangenlose Arbeitskammer umgeleitet wird. Auf diese Weise erhöht sich der Volumenstrom an Hydraulik, der in die kolbenstangenlose Arbeitskammer einströmt. Diese Schaltung hat im Vergleich zur Schaltung der Figur 5 den Vorteil, dass trotz des limitierten Fördervolumens der Pumpe P der Volumenstrom in die kolbenstangenlose Arbeitskammer gesteigert werden kann. Dies ermöglicht eine höhere Verstellgeschwindigkeit des Kolbens in Fügerichtung R_{F}. Es ist aber zu beachten, dass mithilfe des hohen Volumenstroms keine hohen Stempelkräfte realisierbar sind. Daher wird die Kolbenstange schnell bewegt, wie es in der Bewegungsstufe gewünscht ist, kann aber bei dieser Schaltung nicht die gewünschten Hydraulikdrücke für die notwendige Stempelkraft beim Fügen erzeugen. Dazu wird dann in die Kraftstufe umgeschaltet.

Gemäß einer weiteren bevorzugten Ausführungsform der erfindungsgemäßen Fügevorrichtung werden anstelle der Differenzialschaltung des hydraulischen Zylinders Z oder eines Differenzialzylinders zwei Pumpen P1 und P2 zum Betrieb der Antriebseinheit A3 (siehe Figur 3) verwendet. Die zwei Pumpen P1, P2 sind darauf ausgelegt, mithilfe eines hohen Volumenstroms an Hydraulikflüssigkeit ein schnelles Versetzen des Stempels, also die Bewegungsstufe zu realisieren. Mit einem niedrigen Volumenstrom der Hydraulikflüssigkeit und einer entsprechend ausgelegten Hydraulikpumpe wird die bereits oben genannte Kraftstufe der Fügevorrichtung realisiert. Diese sorgt für eine ausreichende Stempelkraft, um die Bauteile am Ende eines Fügevorgangs miteinander zu verbinden.

Um die Vorteile einer Differenzialschaltung zum Betrieb eines hydraulischen Zylinders Z hervorzuheben, zeigt Figur 6 ein schematisches Diagramm, in dem der Stempelweg einer Fügevorrichtung in Abhängigkeit von der Zeit aufgetragen ist. Während der zurückgelegte Stempelweg auf der Y-Achse aufgetragen ist, ist die erforderliche Fügezeit auf der X-Achse aufgetragen. Die beiden dargestellten Kurven steigen linear bis zu einem Maximum an. Kurz vor Erreichen des Maximums dringt beispielsweise ein Stanzniet in die miteinander zu verbindenden Bauteile A ein und stellt eine entsprechende Verbindung her. Die für diesen Fügevorgang erforderliche Stempelbewegung wurde gemäß der rechten Kurve mit einer bekannten Fügevorrichtung realisiert, die nur durch eine einfache Hydraulikpumpe ohne Differenzialschaltung angetrieben ist. Die linke Fügekurve des Diagramms der Figur 6 stellt einen zurückgelegten Stempelweg dar, der mit einer Antriebseinheit mit Differenzialschaltung oder mit einer zweistufig arbeitenden Antriebseinheit mit gesteuerter Umschaltung realisiert worden ist. Diese gesteuerte Umschaltung erfolgt zwischen zwei Hydraulikpumpen P1, P2 (siehe oben) oder elektronisch in einem zweistufigen Getriebe oder über zwei Spindeln unterschiedlicher Gewindesteigung. Aufgrund des Versatzes der beiden Kurven auf der Zeit-Achse ist klar erkennbar, dass die Differenzialschaltung (siehe oben) oder die über ein Niederhaltermodul gesteuerte Umschaltung für höhere Stempelgeschwindigkeiten und damit für kürzere Zustellzeiten des Stempels sorgt. Entsprechend ist die Taktzeit zum Herstellen einer Fügeverbindung verkürzt. Die erste Kurve in Figur 6 zeigt zudem zwei abfallende Schenkel. Die gestrichelte Linie beschreibt den Rückhub des Kolbens in einer Differenzialschaltung. Hier kann der Rückhub nicht in gleicher Weise beschleunigt werden wie bei der Zustellung. Daher verläuft der Rückhub auch mit ähnlicher Steigung wie in der zweiten Kurve ohne Differenzialschaltung. Einen alternativen Rückhub zeigt die Strich-Punkt-Linie der ersten Kurve an. Dieser beschleunigte Rückhub wird über die Antriebeinheit mit zwei Hydraulikpumpen P1, P2 oder zwei unterschiedlichen Pumpenstufen realisiert. Denn auch beim Rückhub können beiden Pumpen einen ähnlich hohen Volumenstrom erzielen wie beim Zustellen. Wie oben bereits erläutert worden ist, ist die Fügevorrichtung mit dem Niederhaltermodul N ausgestattet. Das Niederhaltermodul N spannt in bekannter Weise Bauteile gegen eine Matrize M oder gegen ein Gegenlager vor, um sie während der Verbindung der Bauteile oder während eines Setzvorgangs zu fixieren.

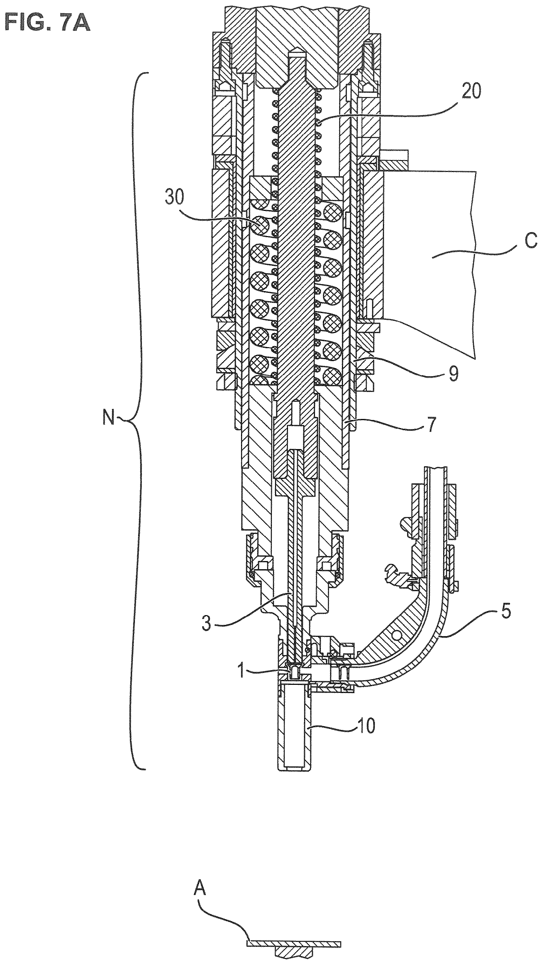

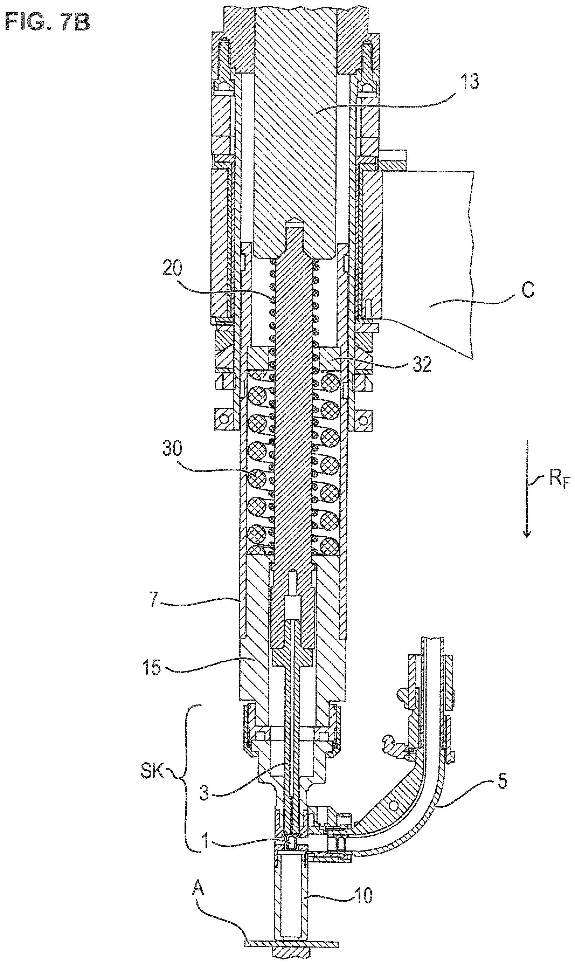

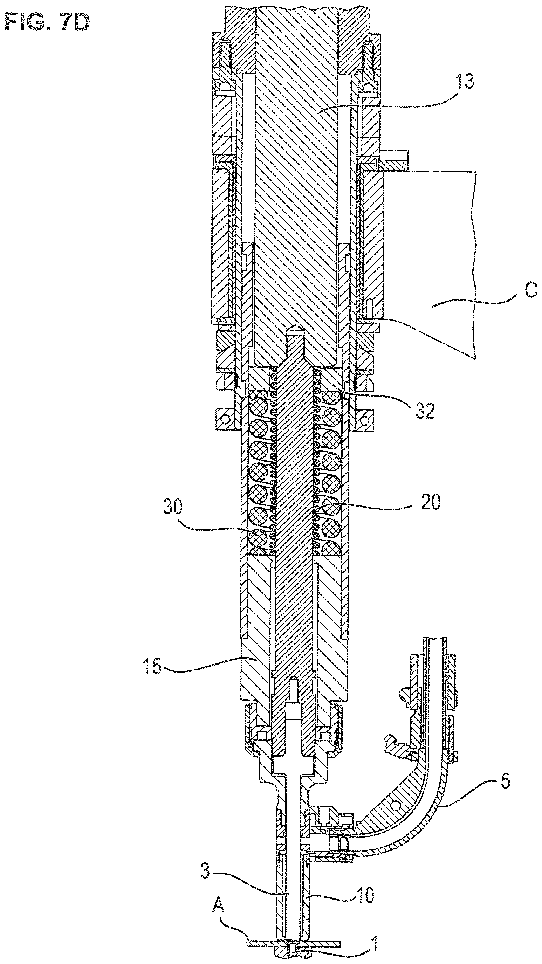

Das Niederhaltermodul N umfasst den hülsenartigen Niederhalter 10. Der Niederhalter 10 bildet einen Fügekanal für den Stempel 3 und/oder für ein Fügeelement 1, vorzugsweise einen Stanzniet. Sobald die Fügevorrichtung auf die zu verbindenden Bauteile A zubewegt wird, setzt der Niederhalter 10 auf den Bauteilen A auf und beginnt diese zu komprimieren (siehe Figuren 7A und B). Um diesen Fügevorgang optimal zu gestalten, sind innerhalb des Niederhaltermoduls N mindestens eine erste Feder 20 und eine zweite Feder 30 angeordnet. Die erste Feder 20 weist vorzugsweise eine kleinere Federkonstante als die zweite Feder 30 auf.

Beim Zustellen der Fügevorrichtung zu den Bauteilen A dient die schwache erste Feder 20 als Spreizfeder. Durch die Vorspannung der ersten Feder 20 wird sichergestellt, dass der Niederhalter 10 dem Stempel 3 lageunabhängig um eine definierte Strecke voraus eilt. Zudem wird dadurch gewährleistet, dass das Fügeelement 1 über die Elementzufuhr 5 auch bei teilweise geöffnetem Werkzeug zugeführt werden kann. Denn sobald der Niederhalter N das Bauteil K verlässt, öffnet sich seitlich ein Fenster für die Nietzufuhr (siehe Fig. 7A). Dabei bildet bevorzugt die Stempelunterseite einen Teil der Nietführungsfläche.

Eine Niederhaltermechanik und eine Stempelmechanik sind innerhalb einer Niederhalterhülse 7 angeordnet, die in einem Gehäuse 9 geführt werden. Das Gehäuse 9 dient der Übertragung der aufzubringenden Stempelkraft zwischen dem C-Rahmen C und der Antriebseinheit A1; A2; A3.

Sobald der Niederhalter 10 auf dem mindestens einen Bauteil A aufliegt, entsteht eine Relativkraft zwischen der Einheit aus Niederhalter 10, Setzkopf SK, Adapter 15 und dem Stempelkolben 13. Dadurch wird die erste Feder 20 komprimiert. Gleichzeitig versetzt der Stempel 3 das Fügeelement 1 im Niederhalter 10 zum mindestens einen Bauteil A. Die Federkraft der ersten Feder 20 ist bevorzugt so gewählt, dass eine kraftgeregelte mehrstufige Antriebseinheit A1; A2; A3 nicht von der Bewegungsstufe auf die Kraftstufe schaltet (siehe unten).

Während des Fügevorgangs erfasst ein Kraftsensor die am Stempel 3 wirkende Kraft. Da sich der Niederhalter 10 am Stempel 3 abstützt und über den Stempelkolben 13 und die zwischengeschalteten Federn 20, 30 zugestellt wird, erfasst der Kraftsensor auch über den Niederhalter 10 aufgebrachte Kräfte. Sofern kein Kraftsensor vorliegen sollte, wird die Belastung des Stempels 3 und des Niederhalters 10 bevorzugt auch mit dem Drucksensor D erfasst. Dieser liefert genauso wie ein Kraftsensor die Belastung von Stempel 3 und/oder Niederhalter 10 über den Hydraulikdruck im Zylinder Z, vorzugsweise über den Hydraulikdruck in der kolbenstangenfreien Arbeitskammer des Zylinders Z.

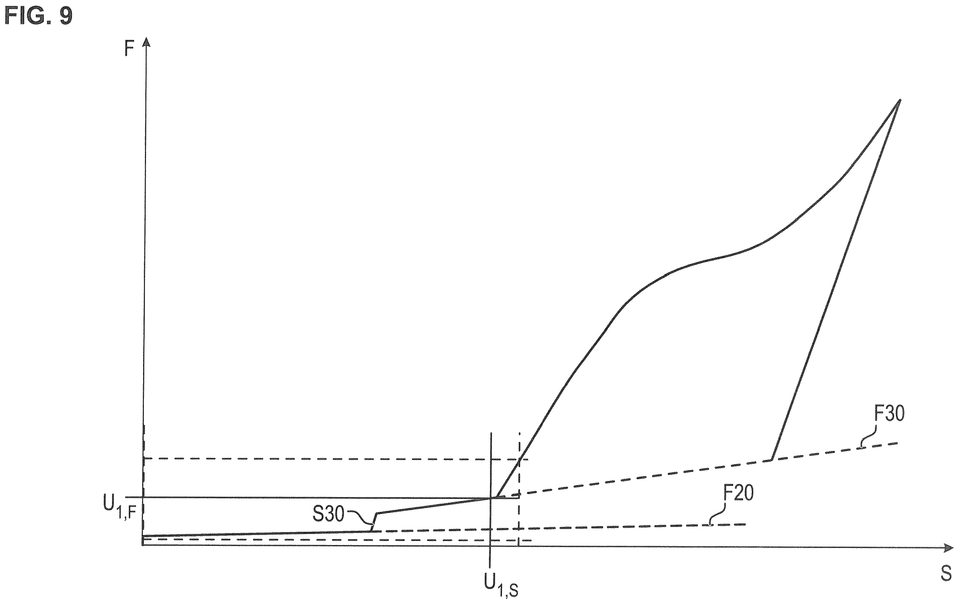

Betrachtet man die Phasen des Fügevorgangs gemäß den Figuren 7A und B im Kraft/Belastung-Stempelweg-Diagramm aus Figur 9, zeigt die Kraft/Belastung-Stempelweg-Kurve einen ersten konstanten Anstieg nach dem Koordinatenursprung in positiver Richtung der x-Achse. Auf der x-Achse ist der zurückgelegte Stempelweg S aufgetragen, während auf der y-Achse die Belastung in Form der Stempelkraft F aufgetragen ist. Dieser erste konstante Anstieg entspricht dem Anstieg der gestrichelten Linie F20, die eine Kraft-Weg-Kurve der ersten Feder 20 allein repräsentiert. Diese gestrichelte Linie F20 kann ebenfalls als Federkennlinie für die erste Feder 20 bezeichnet werden. Da die erste Feder 20 bevorzugt dem Hook'schen Gesetz gehorcht, entspricht der Anstieg der gestrichelten Linie F20 der Federkonstante der ersten Feder 20.

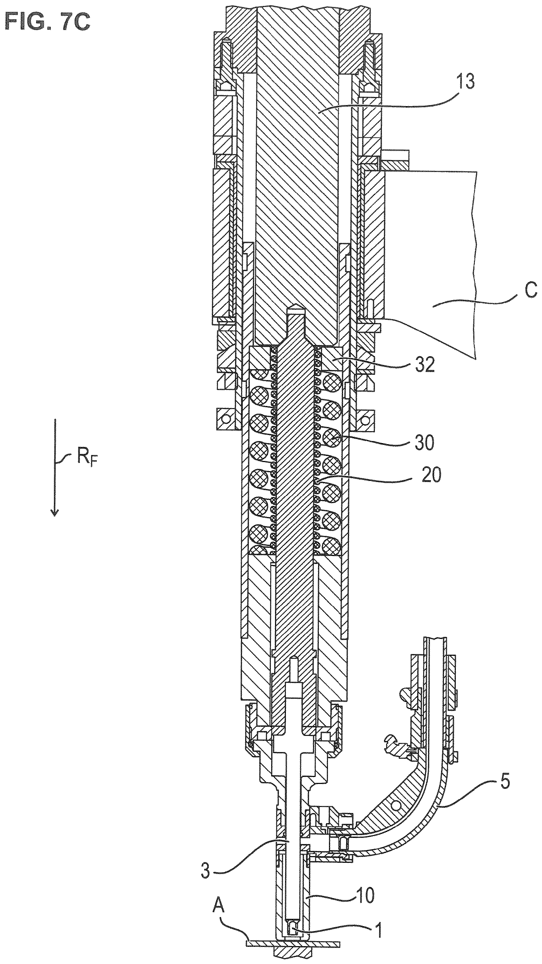

Gemäß Figur 7C wird der Stempelkolben 13 weiter in Richtung Bauteil A bewegt. Dadurch wird die erste Feder 20 vollständig komprimiert. Daraufhin greift der Stempelkolben 13 am Mitnehmer 32 an, um bei einer weiteren Bewegung in Fügerichtung R_{F} die zweite Feder 30 zu komprimieren.

Im Kraft-Stempelweg-Diagramm der Figur 9 bewirkt die beginnende Kompression der zweiten Feder 30 einen Sprung S30, dessen Steigung bevorzugt die Steifigkeit des C-Rahmens C wiedergibt. Diese Steigung entspricht der Steigung der abfallenden Kurve am rechten Bildrand von Fig. 9. Nach diesem Sprung S30 verläuft die Kraft-Stempelweg-Kurve auf einer kombinierten Federkennlinie F₂₀₊₃₀, die sich aus den beiden Federkennlinien der Federn 20 und 30 ergibt. Bevorzugt ist die zweite Feder 30 stärker als die erste Feder 20, sodass der lineare Anstieg nach dem Sprung S30 größer ist als davor. Der Sprung S30 wäre aber auch bei gleicher Federkonstante beider Federn 20, 30 erkennbar.

Da die axiale Länge der einzelnen Komponenten des Niederhaltermoduls N, wie beispielsweise des Niederhalters 10, des Stempels 3, des Stempelkolbens 13, vorzugsweise im komprimierten Zustand bekannt ist, ist anhand des Sprungs S30 die Entfernung der Stempelunterseite zum Bauteil A ableitbar. Ist eine Länge eines zu setzenden Fügeelements 1, beispielsweise ein Stanzniet, bekannt, berechnet die zentrale Steuereinheit K vorzugsweise, an welchem noch zu erreichenden Stempelweg S bzw. nach welchem noch zu absolvierenden Stempelwegabschnitt das Fügeelement 1 auf das Bauteil A aufsetzt.

Bevor das Fügeelement 1 auf das Bauteil A aufsetzt, ist der Stempel 3 in der mindestens einen Bewegungsstufe der Antriebseinheit A1; A2; A3 bewegbar. Denn innerhalb dieser Phase des Fügevorgangs ist eine kleine Stempelkraft zur Bewegung bzw. Zustellung des Fügeelements 1 zum Bauteil A ausreichend. Vielmehr ist eine hohe Stempelgeschwindigkeit, vorzugsweise in einem Bereich von 150-1000 mm/s in Fügerichtung, für effektive Taktzeiten des Fügevorgangs vorteilhaft. Zum Nieten bzw. zum Herstellen einer Fügeverbindung werden vorzugsweise Stempelgeschwindigkeiten im Bereich von 10-150 mm/s in der Kraftstufe genutzt. Daher wird bevorzugt ein Umschaltpunkt U_{1,S} oder U_{1,F} bei einem bestimmten Stempelweg S oder einer bestimmten Stempel- bzw. Niederhalterkraft F festgelegt, an dem das zu setzende Fügeelement 1 bis kurz vor die Oberfläche des Bauteils A zugestellt worden ist. Dieser Umschaltpunkt U_{1,S} bzw. U_{1,F} ist in der zentralen Steuereinheit K hinterlegt und wird während der Erfassung der Belastungs-Stempelweg- oder -Fügezeit-Daten erkannt. Entsprechend wird an dem erfassten Umschaltpunkt U_{1F}, U_{1S} die mehrstufige Antriebseinheit A1; A2; A3 von der Bewegungsstufe auf die Kraftstufe umgeschaltet (siehe oben).

Der Umschaltpunkt U₁ zur Kraftstufe ist bevorzugt der Punkt, an dem der Mitnehmer 32 beginnt, die zweite Feder 30 zu komprimieren. Über den Adapter 15 wird die zweite Feder 30 auf eine definierte Kraft vorgespannt, während sich der Niederhalter 10 am Bauteil A abstützt. Diese Kraft entspricht der Niederhalterkraft zu Beginn des Setzvorgangs.

Als alternativer Umschaltpunkt zur Kraftstufe wird ein Punkt gewählt, der kurz vor Aufsetzen des längsten zu bearbeitenden Fügeelements 1 liegt. So ist sichergestellt, dass zu Beginn des Verbindungs- oder Einpressvorgangs eine ausreichende Niederhalterkraft anliegt. Der Umschaltpunkt U_{1,S} liegt vorzugsweise in einem Bereich, in dem der Stanzniet oder das Fügeelement noch in einem Bereich von 0 bis 20 mm, bevorzugt 0,5 bis 5 mm, vom Bauteil A entfernt ist.

Die Umschaltpunkte U_{1,S} und U_{1,F} sind im Bereich des Stempelwegs S in gleicher Weise definierbar wie im Belastungsbereich von Stempel 3 und Niederhalter 10. Zudem sind die Umschaltpunkte U_{1,S}, U_{1,F} bevorzugt als Schwellenwerte definiert. Sie bilden somit einen Belastungsschwellenwert, vorzugsweise als Kraftwert, Hydraulikdruck oder pneumatischen Druck. Alternativ bilden die Werte des Stempelwegs entsprechende Stempelwegschwellenwerte. Werden diese Schwellenwerte überschritten, wird die Antriebseinheit A1; A2; A3 durch ein Steuersignal der zentralen Steuereinheit von der Bewegungsstufe in die Kraftstufe umgeschaltet. Sollten mehrere Bewegungs- und/oder Kraftstufen vorhanden sein, ist die Definition mehrerer Umschaltpunkte Uₙ ebenfalls bevorzugt. Zudem werden bevorzugt diese Umschaltpunkte für den Rückhub des Stempels definiert. Dies gilt aber nicht bei der Nutzung der Differentialschaltung, da die Differentialschaltung nur zur Beschleunigung des Stempels während der Zustellung zum Bauteil A nutzbar ist.

Der Fügevorgang ist beendet, sobald das Fügeelement in das Blechpaket bzw. die Bauteile A eingepresst worden ist. Dies erfolgt entweder kraftgeregelt, weggeregelt über eine Differenzmessung zwischen Niederhalter 10 und Stempel 3 oder über einen Anschlag. Die Differenzmessung beinhaltet, dass die Position der Stempelfläche in Fügerichtung mit der Position der Niederhalter Fläche verglichen wird. Sind die Positionen gleich bzw. die Differenz beider Positionen Null, wurde das Fügeelement bündig gesetzt. Da vorzugsweise in der zentralen Steuereinheit K eine maximale Fügekraft und/oder ein maximaler Füge-Stempelweg hinterlegt ist, erkennt die zentrale Steuereinheit bevorzugt das Ende des Fügevorgangs. Entsprechend ist es nicht mehr erforderlich, dass die Antriebseinheit A1; A2; A3 den Niederhalter 10 und den Stempel 3 in der Kraftstufe bewegen muss. Vielmehr wird für eine kurze Taktzeit und einen daher effektiven Fügevorgang die Antriebseinheit A1; A2; A3 auf die Bewegungsstufe umgeschaltet, um einen Rückhub des Stempels mit hoher Stempelgeschwindigkeit zu gewährleisten. Dies ist nicht in Kombination mit einer Differentialschaltung anwendbar. Bei diesem Rückhub des Stempels 3 entspannen sich dann nacheinander die zweite Feder 30 und die erste Feder 20. Sobald sich der Niederhalter 10 vom Bauteil A gelöst hat, kann das nächste Fügeelement 1 über die Zufuhr 5 der Fügeelemente der Fügevorrichtung zugeschossen werden.

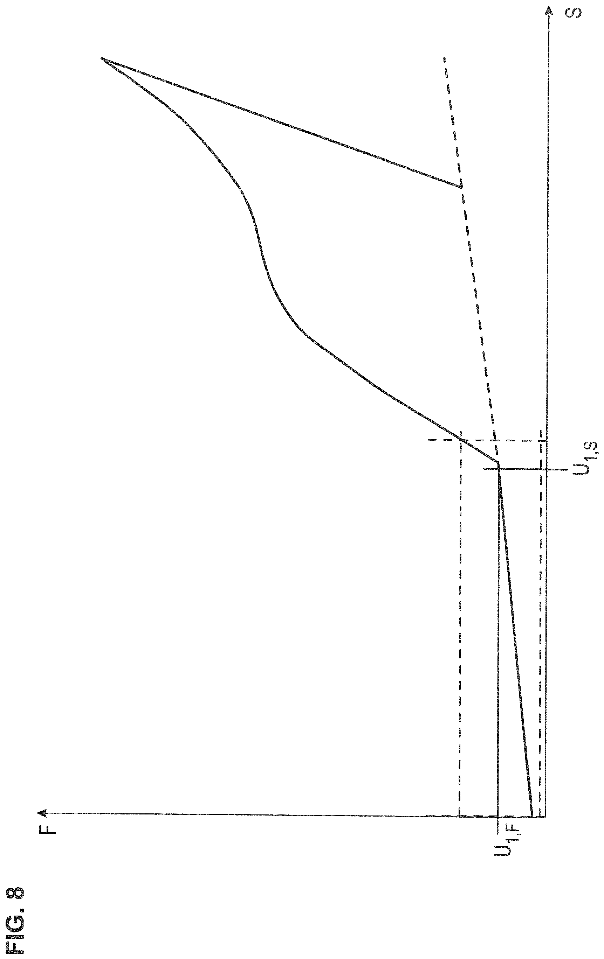

Gemäß einer weiteren bevorzugten Ausführungsform der erfindungsgemäßen Fügevorrichtung wird ein Niederhaltermodul N eingesetzt, welches mit nur einer Feder (nicht gezeigt) ausgestattet ist. Dies führt dazu, dass innerhalb der Belastungs-Stempelweg-Kurve nur ein linearer Anstieg mit konstantem Wert zu erkennen ist, bevor der eigentliche Verbindungsvorgang stattfindet (siehe Figur 8). Da auch im Hinblick eines solchen Niederhaltermoduls N definierbar ist, nach welchem Stempelweg das Fügeelement 1 kurz vor der Oberfläche des Bauteils A angeordnet ist und bei welcher Belastung bzw. Stempelkraft der Beginn des eigentlichen Verbindungsvorgangs kurz bevor steht, sind auch in dieser Niederhalterkonfiguration effektive Umschaltpunkte U_{1,F/S} definierbar. In gleicher Weise wie gemäß obiger Beschreibung werden diese Umschaltpunkte durch Schwellenwerte festgelegt, deren Überschreiten durch die Steuereinheit K erfasst wird. Basierend auf der Erfassung der Überschreitung der Schwellenwerte U_{1,F/S} steuert die Steuereinheit K ein Umschalten der jeweiligen Antriebseinheit A1; A2; A3 von der Bewegungsstufe auf die Kraftstufe an. Nach Beendigung des Fügevorgangs wird entsprechend beim Rückhub des Stempels die Antriebseinheit A1; A2; A3 von der Kraftstufe auf die Bewegungsstufe umgeschaltet. Dies ist nicht bei der Differentialschaltung anwendbar.

Gemäß einer weiteren bevorzugten Ausführungsform vorliegender Erfindung wird anstelle der zentralen Steuereinheit, die in Kombination oder auf Basis von ausgewerteten Sensordaten arbeitet, die selbstständig bzw. automatisch schaltende Steuereinheit eingesetzt. Diese wird am Beispiel einer Fügevorrichtung mit einer elektrohydraulisch betriebenen Antriebseinheit (siehe oben) beschrieben.

In der elektrohydraulisch angetriebenen Fügevorrichtung wird die Belastung von Stempel und Niederhalter über den Hydraulikdruck in der kolbenstangenlosen Arbeitskammer bestimmt. Aus diesem Hydraulikdruck ist die am Stempel und am Niederhalter anliegende Kraft ableitbar. Im Ventilblock V der elektrohydraulischen Antriebseinheit A2; A3 ist eine mechanisch voreingestellte Umschalteinheit oder ein mechanisch voreingestelltes Umschaltventil vorgesehen. Diese Umschalteinheit ist in Bezug auf einen Belastungsschwellenwert, hier der Hydraulikdruck, vorkonfiguriert. Innerhalb der Umschalteinheit ist bevorzugt ein Umschaltstößel gegen den Hydraulikdruck in der kolbenstangenlosen Arbeitskammer des Hydraulikzylinders federvorgespannt. Die Stärke der Federvorspannung ist derart eingestellt, dass sie dem oben beschriebenen Belastungsschwellenwert U_{1,F} entspricht.

Erreicht somit bevorzugt der Hydraulikdruck im Hydraulikzylinder eine Größe, die eine ausreichende Kompression nur einer oder mehreren Niederhalterfedern 20,30 signalisiert, noch bevor das Fügeelement, hier bevorzugt ein Stanzniet, in die Bauteile A eingepresst wird, dann versetzt der Hydraulikdruck den Umschaltstößel gegen dessen Federvorspannung, d.h. er schaltet die Umschalteinheit innerhalb der elektrohydraulischen Antriebseinheit um.

Die Umschalteinheit gibt vor Erreichen des Schwellenwerts oder des Umschaltpunkts vor, dass die elektrohydraulische Antriebseinheit A2; A3 in der mindestens einen Bewegungsstufe arbeitet. Bei Erreichen des Umschaltpunkts schaltet die Umschalteinheit in die Kraftstufe der elektrohydraulischen Antriebseinheit A2; A3. Da die Umschalteinheit mechanisch vorkonfiguriert ist, erfolgt das Umschalten ohne eine Sensordatenerfassung und -auswertung automatisch. Es liegt eine selbständig schaltende und vorkonfigurierte Steuereinheit vor, die ohne den Austausch elektrischer Signale die Arbeitsstufen der Antriebseinheit A2; A3 steuert.

Sobald der Fügevorgang abgeschlossen ist, wird während des Rückhubs des Stempels der Hydraulikdruck bis unterhalb des Schwellenwerts verringert. Entsprechend sorgt die Federvorspannung der Umschalteinheit für ein Umschalten von der Kraftstufe in die Bewegungsstufe der elektrohydraulischen Antriebseinheit A2; A3.

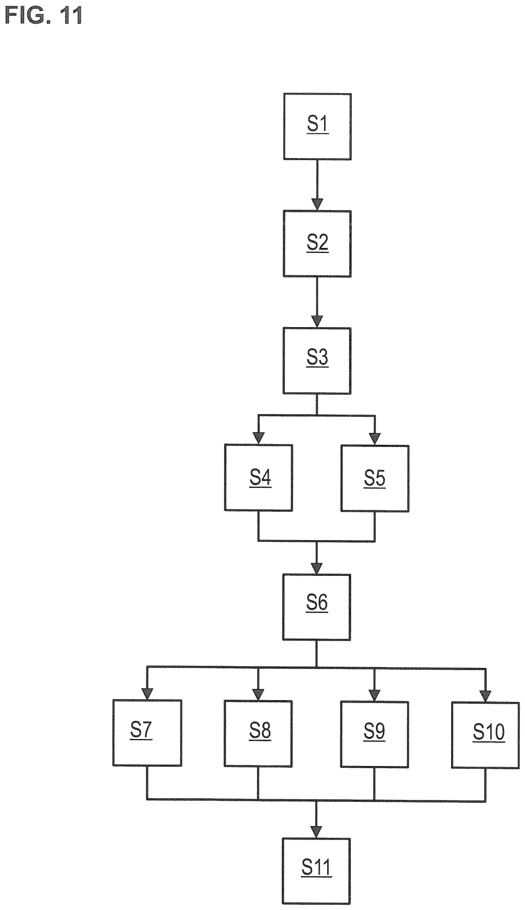

Eine bevorzugte Ausführungsform der elektrohydraulischen Antriebseinheit A2 in Kombination mit der automatisch umschaltenden Steuereinheit U in Abhängigkeit vom Hydraulikdruck zeigt Figur 11 A, B. In Figur 11 A ist schematisch der Hydraulikschaltplan gezeigt, wenn der hydraulisch arbeitende Setzzylinder Z mit einer elektrohydraulischen Antriebseinheit A2 mit Differenzialschaltung angetrieben wird. Am linken Bildrand erkennt man den Hydraulikzylinder Z mit kolbenstangenseitiger und kolbenstangenloser Arbeitskammer. Die Hydraulikflüssigkeit zum Betrieb des Hydraulikzylinders Z wird mit dem bevorzugten Servomotor SA aus dem Hydraulikreservoir R zum Hydraulikzylinder Z gepumpt.

Der Ventilblock V umfasst eine Differenzialschaltung. Diese verbindet in der gezeigten Bewegungsstufe die kolbenstangenseitige Arbeitskammer mit der kolbenstangenlosen Arbeitskammer, um beim Zustellen des Stempels den Volumenstrom an Hydraulikflüssigkeit in die kolbenstangenlose Arbeitskammer zu erhöhen. Gleichzeitig wird damit die Stempelgeschwindigkeit des Hydraulikzylinders erhöht. Die Umschalteinheit U, die die Umschaltung des Ventilblocks V im Rahmen der Differenzialschaltung von der Bewegungsstufe (Figur 11 A) auf die Kraftstufe (Figur 11 B) realisiert, wird durch den im Hydrauliksystem vorhandenen Hydraulikdruck gesteuert. Dieser Hydraulikdruck, der über die Pumpe mit Servomotor SA erzeugt wird, ist überall im Hydrauliksystem annähernd gleich groß. Wird während der Zustellung des Stempels zu den Bauteilen A die erste und/oder zweite Niederhalterfeder 20,30 komprimiert, steigt der Hydraulikdruck im Hydrauliksystem entsprechend an. Überschreitet der Hydraulikdruck im Hydrauliksystem einen vorgewählten und in der Umschalteinheit über Federvorspannung oder ähnliches eingestellten Schwellenwert des Hydraulikdrucks, dann schaltet die Umschalteinheit druckgesteuert auf die Kraftstufe (Figur 11 B) um. In der Kraftstufe fließt der Volumenstrom der kolbenstangenseitigen Arbeitskammer zur Pumpe und wird in die kolbenstangenlose Arbeitskammer gepumpt. Zusätzlich dazu wird dem Hydraulikreservoir R Hydraulikflüssigkeit entnommen und ebenfalls über die Pumpe in die kolbenstangenlose Arbeitskammer gepumpt, um das Kolbenstangenvolumen auszugleichen.

Der Servomotor SA pumpt die Hydraulikflüssigkeit direkt in die kolbenstangenlose Arbeitskammer. In diesem Zusammenhang ist es von Vorteil, dass der die Pumpe antreibende Servomotor SA seine Geschwindigkeit beliebig variieren und auch schrittweise verfahren kann. Dies gewährleistet eine vielseitige und fügefallbezogene Drucksteuerung durch den Servomotor SA, was allgemein von Vorteil bei der Nutzung des Servomotors SA in Kombination mit einer Pumpe ist.

Gemäß einer weiteren bevorzugten Ausführungsform vorliegender Erfindung ist eine vorkonfigurierte und selbstständig schaltende Steuereinheit auch in Abhängigkeit vom Stempelweg realisierbar. Zu diesem Zweck wird ein Stempelweg-Schwellenwert elektronisch oder mechanisch in einem vorgesehenen Weggeber vorkonfiguriert. Sobald dieser vorkonfigurierte Stempelweg-Schwellenwert durch den Stempel erreicht wird bzw. durch diesen passiert wird, schaltet die Steuereinheit selbstständig bzw. automatisch zwischen den Arbeitsstufen der Antriebseinheit um. Dabei kann es sich um eine elektrohydraulisch, eine pneumatisch oder eine elektromotorisch arbeitende Antriebseinheit A1; A2; A3 handeln. Befindet sich die Antriebseinheit A1; A2; A3 im Zustellhub in Fügerichtung, schaltet die automatische Steuereinheit automatisch von der Bewegungsstufe auf die Kraftstufe um. Befindet sich die Antriebseinheit A1; A2; A3 im Rückhub, schaltet die Steuereinheit von der Kraftstufe automatisch auf die Bewegungsstufe um. Dies ist nicht in Kombination mit der Differentialschaltung anwendbar.

Somit ist vorzugsweise im Rahmen der Vorkonfiguration ein Schwellenwert mechanisch oder elektrisch innerhalb der Umschalteinheit festgelegt. Während des Fügevorgangs wird automatisch innerhalb der selbständig schaltenden und vorkonfigurierten Steuereinheit der vorkonfigurierte Schwellenwert mit dem realen Wert verglichen. Sobald der reale Wert, vorzugsweise vom Hydraulikdruck im Hydraulikzylinder oder vom Stempelweg, den Schwellenwert erreicht, schaltet die Steuereinheit automatisch zwischen Arbeitsstufen der Antriebseinheit A1; A2; A3 um.

### Bezugeszeichenliste

- A: Bauteil
- C: C-Rahmen
- G: Getriebe
- E: Elektromotor
- S: Spindelantrieb
- A1: elektromechanische Antriebseinheit
- M: Matrize
- N: Niederhalter
- K: Steuereinheit
- B: Kopplungselement
- R: Hydraulikreservoir
- P: Hydraulikpumpe
- U: automatische, selbständig schaltende Steuereinheit
- V: Ventilblock
- Z: Hydraulikzylinder
- A2; A3: elektrohydraulische Antriebseinheit
- SA: Servoantrieb
- P1, P2: hydraulische Pumpenstufen
- D: Drucksensor
- W: Wegsensor
- A3: elektrohydraulische Antriebseinheit mit mindestens einer ersten und einer zweiten Hydraulikpumpe P1, P2, SA
- A4: elektrohydraulische Antriebseinheit mit einer hydraulischen Differenzialschaltung
- R_{F}: Fügerichtung
- 1: Füge- oder Funktionselement
- 3: Stempel
- 5: Zufuhr für Fügeelemente
- 7: Niederhalterhülse
- 9: Gehäuse
- 10: Niederhalter
- 20: erste Feder
- 30: zweite Feder
- 13: Stempelkolben
- 15: Adapter
- SK: Setzkopf
- S30: Sprung in Kraft/Stempelweg-Kurve
- F20: Federkennlinie der ersten Feder
- F30: Federkennlinie der zweiten Feder
- 32: Mitnehmer

## Patentansprüche

1. Eine Fügevorrichtung, insbesondere ein Stanznietsetzgerät, eine Clinchvorrichtung oder ein Bolzensetzgerät, mit
einem Stempel (3), mit dem eine geradlinige, nicht drehende Setzbewegung ausführbar ist,
einem Niederhalter (N;10), mit dem in einer Fügerichtung (R_{F}) ein oder mehrere Bauteile (A) komprimierbar sind, und mit
einer zumindest zweistufig arbeitenden Antriebseinheit (A1; A2; A3; A4), mit der der Stempel (3) und der Niederhalter (N;10) bewegbar und die in Abhängigkeit von einer durch den Stempel und/oder Niederhalter aufbringbaren Kraft und/oder in Abhängigkeit von einem realisierbaren Stempelweg und/oder Niederhalterweg und/oder in Abhängigkeit von einer Fügezeit und/oder in Abhängigkeit vom elektrischen Motorstrom einer Pumpe (P) umschaltbar ist, wobei die Antriebseinheit (A1; A2; A3; A4) aufweist:
a. einen zumindest zweistufigen elektrischen Spindelantrieb (S), in dem ein Getriebe (G) über mindestens zwei umschaltbare unterschiedliche Übersetzungsstufen oder zwei Spindeln unterschiedlicher Gewindesteigung eine Drehbewegung eines Elektromotors (E) in eine geradlinige Setzbewegung des Stempels (3) umwandeln, wobei sich die jeweilige geradlinige Setzbewegung der Übersetzungsstufen in möglichen Stellwegen pro Zeiteinheit und/oder in einer aufbringbaren Stempelkraft unterscheiden und zumindest der Elektromotor (E), das umschaltbare Getriebe (G) und der Spindelantrieb ein einheitlich handhabbares Modul (A1) bilden, oder
b. einen zumindest zweistufigen hydraulischen Stempelantrieb (A3) mit einem doppeltwirkenden Zylinder mit einseitiger Kolbenstange, einem Hydraulikreservoir (R), einem Elektromotor (SA) in Verbindung mit einer ersten (P1) und einer zweiten hydraulischen Pumpenstufe (P2) und einem Ventilblock (V), die zusammen ein einheitlich handhabbares Modul (A3) bilden, mit dessen erster Stufe (P1) im Vergleich zur zweiten Stufe (P2) ein hoher Volumenstrom mit einem niedrigen Hydraulikdruck und mit dessen zweiter Stufe (P2) ein niedriger Volumenstrom mit einem hohen Hydraulikdruck bereitstellbar ist, oder
c. einen zumindest zweistufigen hydraulischen Stempelantrieb mit einem doppeltwirkenden Zylinder mit einseitiger Kolbenstange, einem Hydraulikreservoir (R), einem Elektromotor (SA) in Verbindung mit einer Hydraulikpumpe (P) und einem Ventilblock (V), die zusammen ein einheitlich handhabbares Modul (A2) bilden, mit dessen Ventilblock (V) der doppeltwirkende Zylinder als Differenzialzylinder betreibbar ist, so dass mit dessen erster Stufe im Vergleich zur zweiten Stufe ein hoher Volumenstrom mit einem niedrigen Hydraulikdruck und mit dessen zweiter Stufe ein niedrigerer Volumenstrom mit einem hohen Hydraulikdruck bereitstellbar ist,
**dadurch gekennzeichnet, dass** weiterhin vorgesehen ist
zumindest ein Belastungssensor (D), so dass eine mechanische Belastung des Stempels (3) und des Niederhalters (N;10) in Fügerichtung (R_{F}) erfassbar ist, insbesondere ein Kraftsensor oder ein Drucksensor (D) für Hydraulikflüssigkeit oder ein Drucksensor für Druckluft oder ein Motorstromsensor, und
ein Wegsensor (W), so dass ein Stempelweg und/oder ein Niederhalterweg erfassbar ist, und/oder
optional eine Zeiterfassung, so dass eine Fügezeit erfassbar ist, wobei
der Niederhalter (N;10) über den Stempel (3) bewegbar ist, sodass mit dem Belastungssensor (D) eine mechanische Belastung des Niederhalters (N;10) oder der Bauteile (A) erfassbar ist, während der Niederhalter (N;10) mit mindestens einer ersten Feder (20) über die Bewegung des Stempels (3) gegen das mindestens eine Bauteil (A) vorspannbar ist, wobei
mit zumindest einer Steuereinheit (K) allein, die eine selbstständig schaltende Steuereinheit ist, die aufgrund einer mechanischen Konfiguration belastungsabhängig, vorzugsweise druckabhängig, zwischen den Antriebsstufen der Antriebseinheit umschaltet, oder mit zumindest einer Steuereinheit in Kombination mit dem Belastungssensor (D) ein Erreichen mindestens eines ersten Schwellenwerts der Belastung des Stempels (3) und/oder des Niederhalters (N;10) erkennbar ist oder
mit zumindest einer Steuereinheit (K) allein, die eine selbstständig schaltende Steuereinheit ist, die aufgrund einer mechanischen Konfiguration wegabhängig zwischen den Antriebsstufen der Antriebseinheit umschaltet, oder mit zumindest einer Steuereinheit in Kombination mit dem Wegsensor (W) ein Erreichen mindestens eines ersten Schwellenwerts des Stempelwegs oder
mit zumindest einer Steuereinheit (K) allein, welche eine selbstständig schaltende Steuereinheit ist, die aufgrund einer mechanischen Konfiguration belastungsabhängig, vorzugsweise druckabhängig, oder wegabhängig zwischen den Antriebsstufen der Antriebseinheit umschaltet, oder mit zumindest einer Steuereinheit in Kombination mit der Zeiterfassung das Erreichen mindestens eines ersten Schwellenwerts der Fügezeit erkennbar ist,
woraufhin die zumindest zweistufig arbeitende Antriebseinheit (A1; A2; A3; A4) durch die Steuereinheit (K) zwischen Antriebsstufen umschaltbar ist, die zumindest eine Bewegungsstufe und die zumindest eine Kraftstufe umfasst, von denen sich die Bewegungsstufe im Vergleich zur Kraftstufe durch eine höhere Stempelgeschwindigkeit und die Kraftstufe im Vergleich zur Bewegungsstufe durch eine höhere aufbringbare Stempelkraft auszeichnet.

2. Fügevorrichtung gemäß Patentanspruch 1, in der mit einer Steuereinheit in Kombination mit dem Belastungssensor eine Belastungszunahme mit einem konstanten Anstieg erfassbar ist, in deren Verlauf der erste Schwellenwert der Belastung definiert ist.

3. Fügevorrichtung gemäß Patentanspruch 2, in der mit der Steuereinheit (K) die Belastungszunahme in Abhängigkeit vom Stempelweg oder von der Fügezeit auswertbar ist.

4. Fügevorrichtung gemäß einem der vorhergehenden Patentansprüche, in der die Belastung als eine Stempelkraft, als ein Hydraulikdruck oder als ein Pneumatikdruck erkennbar ist.

5. Fügevorrichtung gemäß Patentanspruch 3, in der mit der Steuereinheit (K) in Kombination mit dem Belastungssensor (D) in der Belastungszunahme eine Änderung von einem ersten positiven konstanten Anstieg auf einen zweiten positiven Anstieg erfassbar ist, wobei der erste Anstieg kleiner ist als der zweite Anstieg, und basierend auf der Anstiegszunahme die Antriebseinheit (A1; A2; A3; A4) von der mindestens einen Bewegungsstufe auf die mindestens eine Kraftstufe umschaltbar ist.

6. Fügevorrichtung gemäß einem der vorhergehenden Patentansprüche, in der der Niederhalter (N;10) eine zweite Feder (30) aufweist, mit der der Niederhalter (N;10) gegen die Bauteile (A) vorspannbar ist und die eine größere Federkonstante als die erste Feder (20) aufweist.

7. Fügevorrichtung gemäß Patentanspruch 6 in Kombination mit Patentanspruch 5, in der der erfasste zweite positive Anstieg konstant ist und auf der Wirkung der zweiten Feder (30) des Niederhalters (N;10) basiert.

8. Fügevorrichtung gemäß einem der vorhergehenden Patentansprüche, die als Stanznietsetzgerät vorgesehen ist, den zumindest zweistufigen hydraulischen Stempelantrieb als Antriebseinheit (A2; A3) aufweist und in der ein mechanisch voreingestelltes Umschaltventil (V) die Steuereinheit (K) für die Umschaltung der Antriebseinheit (A2; A3) zwischen Bewegungs- und Kraftstufe bildet, welches druckabhängig von der Bewegungsstufe in die Kraftstufe und umgekehrt umschaltet.

9. Ein Fügeverfahren einer Fügevorrichtung gemäß einem der vorhergehenden Patentansprüche, in dem mit dem Stempel (3) eine geradlinige, nicht drehende Setzbewegung (S1) ausgeführt, mit dem Niederhalter (N;10) in Fügerichtung (R_{F}) ein oder mehrere Bauteile (A) komprimiert (S2) und die zumindest zweistufig arbeitende Antriebseinheit (A1; A2; A3; A4), mit der der Stempel (3) und der Niederhalter (N;10) bewegbar sind, in Abhängigkeit von einer durch den Stempel (3) und/oder den Niederhalter (N;10) aufbringbaren Kraft und/oder in Abhängigkeit von dem realisierbaren Stempelweg und/oder in Abhängigkeit von der Fügezeit umgeschaltet wird, wobei die Antriebseinheit (A1; A2; A3; A4) aufweist:
a. den zumindest zweistufigen elektrischen Spindelantrieb (S), in dem das Getriebe (G) über mindestens zwei umschaltbare unterschiedliche Übersetzungsstufen oder zwei Spindeln unterschiedlicher Gewindesteigung eine Drehbewegung des Elektromotors (E) in eine geradlinige Setzbewegung des Stempels (3) umwandeln, wobei sich die jeweilige geradlinige Setzbewegung der Übersetzungsstufen in möglichen Stellenwegen pro Zeiteinheit und/oder in einer aufbringbaren Stempelkraft unterscheiden und zumindest der Elektromotor (E), das umschaltbare Getriebe (G) und der Spindelantrieb (S) das einheitlich handhabbare Modul (A1) bilden, oder
b. den zumindest zweistufigen hydraulischen Stempelantrieb (A3) mit dem doppeltwirkenden Zylinder mit einseitiger Kolbenstange, dem Hydraulikreservoir (R), dem Elektromotor (SA) in Verbindung mit der ersten (P1) und der zweiten hydraulischen Pumpenstufe (P2) und dem Ventilblock (V), die zusammen das einheitlich handhabbare Modul (A3) bilden, mit dessen erster Stufe (P1) im Vergleich zur zweiten Stufe (P2) ein hoher Volumenstrom mit einem niedrigen Hydraulikdruck und mit dessen zweiter Stufe (P2) ein niedriger Volumenstrom mit einem hohen Hydraulikdruck bereitstellbar ist, oder
c. den zumindest zweistufigen hydraulischen Stempelantrieb (A2) mit dem doppeltwirkenden Zylinder mit einseitiger Kolbenstange, dem Hydraulikreservoir (R), dem Elektromotor (SA) in Verbindung mit der Hydraulikpumpe (P) und dem Ventilblock (V), die zusammen ein einheitlich handhabbares Modul (A2) bilden, mit dessen Ventilblock (V) der doppeltwirkende Zylinder als Differenzialzylinder betreibbar ist, so dass mit dessen erster Stufe im Vergleich zur zweiten Stufe ein hoher Volumenstrom mit einem niedrigen Hydraulikdruck und mit dessen zweiter Stufe ein niedrigerer Volumenstrom mit einem hohen Hydraulikdruck bereitstellbar ist,
**dadurch gekennzeichnet, dass**
mit zumindest dem Belastungssensor (D) eine mechanische Belastung des Stempels (3) und/oder des Niederhalters (N;10) in Fügerichtung (R_{F}) als Belastungssignal erfasst wird, insbesondere ein Kraftsensor oder ein Drucksensor (D) für Hydraulikflüssigkeit oder ein Drucksensor für Druckluft (S3) oder ein Motorstromsensor, und
mit dem Wegsensor der Stempelweg und/oder der Niederhalterweg erfasst wird (S4) und/oder mit der Zeiterfassung eine Fügezeit erfasst wird (S5), wobei
der Niederhalter (N;10) über den Stempel (3) bewegt wird (S6), während der Niederhalter (N;10) mit mindestens einer ersten Feder (20) über die Bewegung des Stempels (3) gegen das mindestens eine Bauteil (A) gedrückt wird, und
mit zumindest der Steuereinheit (K) allein oder in Kombination mit dem Belastungssensor (D) ein Erreichen mindestens eines ersten Schwellenwerts der Belastung des Stempels (3) (S7) und/oder des Niederhalters (N;10) (S8) erfasst wird oder
mit zumindest der Steuereinheit (K) allein oder in Kombination mit dem Wegsensor ein Erreichen mindestens eines ersten Schwellenwerts des Stempelwegs (S9) und/oder des Niederhalterwegs erkannt wird oder
mit zumindest der Steuereinheit (K) allein oder in Kombination mit der Zeiterfassung das Erreichen mindestens eines ersten Schwellenwerts der Fügezeit erkannt wird (S10),
woraufhin die zumindest zweistufig arbeitende Antriebseinheit (A1; A2; A3; A4) entsprechend durch die Steuereinheit (K) zwischen Antriebsstufen umgeschaltet wird (S11), in denen die Antriebsstufen zumindest eine Bewegungsstufe und zumindest eine Kraftstufe umfassen, in denen sich die Bewegungsstufe im Vergleich zur Kraftstufe durch eine höhere Stempelgeschwindigkeit und die Kraftstufe im Vergleich zur Bewegungsstufe durch eine höhere aufbringbare Stempelkraft auszeichnet.

10. Fügeverfahren gemäß Patentanspruch 9, in dem mit der Steuereinheit (K) allein oder in Kombination mit dem Belastungssensor (D) eine Belastungszunahme erfasst wird, in deren Verlauf der erste Schwellenwert der Belastung definiert ist (S3).

11. Fügeverfahren gemäß Patentanspruch 9 oder 10, in dem mit der Steuereinheit (K) allein oder in Kombination mit dem Belastungssensor die Belastungszunahme in Abhängigkeit vom Stempelweg oder von der Fügezeit ausgewertet wird (S7, S8).

12. Fügeverfahren gemäß einem der Patentansprüche 9 bis 11, in dem die Belastung als eine Stempelkraft, als ein Hydraulikdruck, als ein Motorstrom der Pumpe oder als ein Pneumatikdruck erfasst wird.

13. Fügeverfahren gemäß Patentanspruch 11, in dem mit der Steuereinheit (K) allein oder in Kombination mit dem Belastungssensor (D) in der Belastungszunahme eine Änderung von einem ersten positiven konstanten Anstieg auf einen zweiten positiven Anstieg erfasst wird, wobei der erste Anstieg kleiner ist als der zweite Anstieg, und basierend auf der Anstiegszunahme die Antriebseinheit von der mindestens einen Bewegungsstufe auf die mindestens eine Kraftstufe umgeschaltet wird.

14. Fügeverfahren gemäß einem der vorhergehenden Patentansprüche 10 bis 14, in dem der Niederhalter (N;10) eine zweite Feder (30) aufweist, mit der der Niederhalter (N;10) gegen die Bauteile (A) vorspannbar ist und die eine größere Federkonstante als die erste Feder (20) aufweist.

15. Fügeverfahren gemäß Patentanspruch 14 in Kombination mit Patentanspruch 13, in dem der mit der Steuereinheit (K) erfasste zweite positive Anstieg konstant ist und auf der Wirkung der zweiten Feder (30) des Niederhalters (N;10) basiert.

16. Fügeverfahren gemäß Patentanspruch 9, in dem die selbstständig schaltende Steuereinheit (K) vorgesehen ist, die aufgrund einer mechanischen Konfiguration belastungsabhängig, insbesondere druckabhängig, oder wegabhängig zwischen den Antriebsstufen der Antriebseinheit umschaltet.

17. Fügeverfahren gemäß einem der vorhergehenden Patentansprüche 9 bis 16 , in dem der zumindest zweistufige hydraulische Stempelantrieb durch ein mechanisch voreingestelltes Umschaltventil als Steuereinheit (K) umgeschaltet wird, wenn ein Hydraulikdruck im hydraulischen Stempelantrieb einen Schwellenwert des hydraulischen Arbeitsdrucks erreicht.

## Claims

1. A joining device, in particular a self-piercing rivet tool, a clinching device or a bolt-setting tool comprising:
a punch (3), with which a linear, non-rotating setting movement can be executed,
a clamping device (N;10), with which one or more components (A) can be compressed in a joining direction (R_{F}), and with
a drive unit (A1; A2; A3; A4), that operates in at least two steps, with which the punch (3) and the clamping device (N;10) can be moved, and that can be switched over depending on a force that can be applied by the punch and/or clamping device, and/or depending on a realizable punch path and/or clamping device path, and/or depending on a joining time and/or depending on an electrical motor current of a pump, wherein the drive unit (A1; A2; A3; A4) has:
a. an at least two-step electrical spindle drive (S) in which a gear unit (G) converts a rotary movement of an electric motor (E) into a linear setting movement of the punch (3) by means of at least two switchable different transmission steps, or two spindles with different thread pitches, wherein the respective linear setting movement of the transmission steps differs in terms of possible setting paths per unit time, and/or in terms of an applicable punch force, and at least the electric motor (E), the switchable gear unit (G) and the spindle drive form a single operating module (A1), or
b. an at least two-step hydraulic punch drive (A3) with a dual-acting cylinder having a one-sided piston rod, a hydraulic reservoir (R), an electric motor (SA) connected to a first (P1) and second hydraulic pump step (P2) and a valve block (V) which together form a single operating module (A3), in the first step (P1) of which a high volumetric flow with a low hydraulic pressure in comparison to the second step (P2) can be provided, and in a second step (P2) of which a low volumetric flow with high hydraulic pressure can be provided, or
c. an at least two-step hydraulic punch drive (A3) with a dual-acting cylinder having a one-sided piston rod, a hydraulic reservoir (R), an electric motor (SA) connected to a hydraulic pump (P) and a valve block (V) which together form a single operating module (A2), the dual-acting cylinder being operable as a differential cylinder by means of its valve block (V) so that, in its first step, a high volumetric flow with a low hydraulic pressure in comparison to the second step can be provided, and in its second step, a lower volumetric flow with high hydraulic pressure can be provided,
**characterized in that** it is furthermore provided:
at least one load sensor (D) so that a mechanical load on the punch (3) and the clamping device (N;10) in the joining direction (R_{F}) can be detected, in particular a force sensor or a pressure sensor (D) for hydraulic fluid, or a pressure sensor for compressed air, or a motor current sensor, and
a path sensor (W) so that a punch path and/or a clamping device path can be detected, and/or
optionally, a time recorder so that a joining time can be detected, wherein
the clamping device (N;10) can be moved by the punch (3) so that a mechanical load on the clamping device (N;10) or the components (A) can be detected by the load sensor (D), while the clamping device (N;10) can be pretensioned by at least one first spring (20) by the movement of the punch (3) against the at least one component (A), wherein
by means of at least one control unit (K) by itself, which is an independently switching control unit, which, due to a mechanical configuration, switches between the drive steps of the drive unit depending on the load, preferably depending on the pressure, or by means of at least one control unit in combination with the load sensor, reaching at least one first threshold value of the load on the punch (3) and/or the clamping device (N;10) is detectible or
by means of at least one control unit (K) by itself, which is an independently switching control unit which, due to a mechanical configuration, switches between the drive steps of the drive unit depending on the path, or by means of at least one drive unit in combination with the path sensor (W), reaching at least one first threshold value of the punch path or
by means of at least one control unit (K) by itself, which is an independently switching control unit which, due to a mechanical configuration, switches between the drive steps of the drive unit depending on the load, preferably depending on the pressure, or depending on the path, or by means of at least one control unit in combination with the time recorder, reaching at least one first threshold value of the joining time is detectible,
after which the drive unit (A1; A2; A3; A4), that operates in at least two steps, can be switched by the control unit (K) between drive steps that comprises at least one movement step and the at least one power step, of which the movement step is distinguished by a faster punch speed in comparison to the power step, and the power step is distinguished by a greater applicable punch force in comparison to the movement step.

2. The joining device according to claim 1, in which a control unit in combination with the load sensor detects a load condition with a constant rise, over the course of which the first threshold value of the load is defined.

3. The joining device according to claim 2, in which the increased load can be evaluated by the control unit (K) depending on the punch path or joining time.

4. The joining device according to one of the preceding claims, in which the load is detectible as a punch force, as a hydraulic pressure, or as a pneumatic pressure.

5. The joining device according to claim 3, in which the control unit (K) in combination with the load sensor (D) can detect a change in the increased load from a first positive constant rise to a second positive rise, wherein the first rise is smaller than the second rise, and based on the increased rise, the drive unit (A1; A2; A3; A4) can be switched from the at least one movement step to the at least one power step.

6. The joining device according to one of the preceding claims, in which the clamping device (N;10) has a second spring (30) by means of which the clamping device (N;10) can be pretensioned against the components (A), and that has a greater spring constant than that of the first spring (20).

7. The joining device according to claim 6 in combination with patent claim 5, in which the detected second positive rise is constant and based on the effect of the second spring (30) of the clamping device (N;10).

8. The joining device according to one of the preceding claims, which is provided as a self-piercing rivet tool, which has an at least two-step hydraulic punch drive as a drive unit (A2; A3), and in which a mechanically preset switching valve (V) forms the control unit (K) for switching the drive unit (A2; A3) between the movement and power step that switches from the movement step to the power step and vice versa depending on the pressure.

9. A joining method of a joining device according to one of the preceding claims, in which a punch (3) executes a linear, non-rotating setting movement (S1), a clamping device (N;10) compresses (S2) one or more components (A) in a joining direction (R_{F}), and a drive unit (A1; A2; A3; A4), that operates in at least two steps, can move the punch (3) and the clamping device (N;10), and that is switched depending on a force that can be applied by the punch (3) and/or clamping device (N;10), and/or depending on a realizable punch path, and/or depending on a joining time, wherein the drive unit (A1; A2; A3; A4) has:
a. the at least two-step electrical spindle drive (S) in which a gear unit (G) converts a rotary movement of an electric motor (E) into a linear setting movement of the punch (3) by means of at least two switchable different transmission steps, or two spindles with different thread pitches, wherein the respective linear setting movement of the transmission steps differs in terms of possible setting paths per unit time, and/or in terms of an applicable punch force, and at least the electric motor (E), the switchable gear unit (G) and the spindle drive (S) form a single operating module, or
b. the at least two-step hydraulic punch drive (A3) with a dual-acting cylinder having a one-sided piston rod, the hydraulic reservoir (R), the electric motor (SA) connected to the first (P1) and second hydraulic pump step (P2) and a valve block (V) which together form a single operating module (A3), in the first step (P1) of which, in comparison to the second step (P2), a high volumetric flow with a low hydraulic pressure can be provided, and in a second step (P2) of which a low volumetric flow with high hydraulic pressure can be provided, or
c. the at least two-step hydraulic punch drive (A2) with the dual-acting cylinder having a one-sided piston rod, the hydraulic reservoir (R), the electric motor (SA) connected to the hydraulic pump (P) and a valve block (V) which together form a single operating module (A2), the dual-acting cylinder being operable as a differential cylinder by means of its valve block (V) so that, in its first step, a high volumetric flow with a low hydraulic pressure in comparison to the second step can be provided, and in its second step, a lower volumetric flow with high hydraulic pressure can be provided, **characterized in that**
at least the load sensor (D) detects a mechanical load on the punch (3) and/or the clamping device (N;10) in the joining direction (R_{F}) as a load signal, in particular a force sensor or a pressure sensor (D) for hydraulic fluid, or a pressure sensor for compressed air (S3), or a motor current sensor, and
by means of the path sensor a punch path and/or a clamping device path is detected (S4), and/or
by means of the time recorder a joining time is detected (S5), wherein
the clamping device (N;10) is moved (S6) by the punch (3) while the clamping device (N;10) is pressed against the at least one component (A) via at least one first spring (20) by means of the movement of the punch (3), and
by means of at least the control unit (K) by itself or in combination with the load sensor (D), reaching at least one first threshold value of the load on the punch (3) (S7) and/or the clamping device (N;10) (S8) is detectible or
by means of at least the control unit (K) by itself or in combination with the path sensor, reaching at least one first threshold value of the punch path (S9) and/or the clamping device path is detected or
by means of at least the control unit (K) by itself or in combination with the time recorder, reaching at least one first threshold value of the joining time is detected (S10),
after which the drive unit (A1; A2; A3; A4), that operates in at least two steps, is correspondingly switched by the control unit (K) between drive steps (S11), in which the drive steps comprise at least one movement step and at least one power step in which the movement step is distinguished by a faster punch speed in comparison to the power step, and the power step is distinguished by a greater applicable punch force in comparison to the movement step.

10. The joining method according to claim 9, in which the control unit (K) by itself or in combination with the load sensor (D) detects an increased load over the course of which the first threshold value of the load is defined (S3).

11. The joining method according to claim 9 or 10, in which the control unit (K) by itself or in combination with the load sensor evaluates the increased load depending on the punch path or the joining time (S7, S8).

12. The joining method according to one of the claims 9 to 11, in which the load is detected as a punch force, as a hydraulic pressure, as a motor current of the pump, or as a pneumatic pressure.

13. The joining method according to claim 11, in which the control unit (K) by itself or in combination with the load sensor (D) detects a change from a first positive constant rise to a second positive rise in the increased load, wherein the first rise is smaller than the second rise, and based on the increased rise, the drive unit is switched from the at least one movement step to the at least one power step.

14. The joining method according to one of the preceding claims 10 to 14, in which the clamping device (N;10) has a second spring (30) by means of which the clamping device (N;10) can be pretensioned against the components (A), and that has a greater spring constant than that of the first spring (20).

15. The joining method according to claim 14 in combination with claim 13, in which the second positive rise detected by the control unit (K) is constant and based on the effect of the second spring (30) of the clamping device (N;10).

16. The joining method according to claim 9, in which the independently-switching control unit (K) is provided that switches between the drive steps of the drive unit based on a mechanical configuration depending on the load, in particular depending on the pressure, or depending on the path.

17. The joining method according to one the preceding claims 9 to 16 in which the at least two-step hydraulic punch drive is switched by a mechanically preset switching valve as control unit (K) when a hydraulic pressure in the hydraulic punch drive has reached a threshold value of the hydraulic working pressure.

## Revendications

1. Un dispositif d'assemblage, en particulier un appareil de pose de rivets autopoinçonneurs, un dispositif de clinchage ou un pistolet de scellement de goujons, doté
d'un poinçon (3), qui permet d'exécuter un mouvement de pose linéaire non pivotant, d'un serre-flan (N ; 10), qui permet de comprimer un ou plusieurs composants (A) dans une direction d'assemblage (RF) et
d'une unité d'entraînement (A1 ; A2 ; A3 ; A4) travaillant au moins en deux étapes, qui permet de déplacer le poinçon (3) ainsi que le serre-flan (N ; 10) et qui est commutable en fonction d'une force applicable par le poinçon et/ou le serre-flan et/ou en fonction d'une course de poinçon et/ou d'une course de serre-flan réalisable et/ou en fonction d'une temps d'assemblage et/ou en fonction du courant de moteur électrique d'une pompe (P), dans lequel l'unité d'entraînement (Al ; A2 ; A3 ; A4) présente :
a) un entraînement de broche (S) électrique au moins en deux étapes, dans lequel une transmission (G) ou deux broches d'un pas de filetage différent transforment un mouvement de rotation d'un moteur électrique (E) en un mouvement de pose linéaire du poinçon (3) par le biais d'au moins deux étages de transmission différents commutables, dans lequel le mouvement de pose linéaire respectif des étages de transmission se différencie par des courses de réglage possibles par unité de temps et/ou par une force de poinçonnage applicable et au moins le moteur électrique (E), la transmission (G) commutable et l'entraînement de broche forment un module (A1) actionnable de façon uniforme, ou
b) un entraînement de poinçon (A3) hydraulique au moins en deux étapes, doté d'un vérin à double effet avec une tige de piston unilatérale, d'un réservoir hydraulique (R), d'un moteur électrique (SA) associé à un premier étage (P1) et à un second étage de pompe (P2) hydraulique et d'un bloc de vannes (V), qui forment ensemble un module (A3) actionnable de façon uniforme, le premier étage (P1) duquel permet d'établir un débit volumique élevé à une faible pression hydraulique par rapport au second étage (P2) et le second étage (P2) duquel permet d'établir un faible débit volumique à une pression hydraulique élevée, ou
c) un entraînement de poinçon hydraulique au moins en deux étapes, doté d'un vérin à double effet avec une tige de piston unilatérale, d'un réservoir hydraulique (R), d'un moteur électrique (SA) associé à une pompe hydraulique (P) et d'un bloc de vannes (V), qui forment ensemble un module (A2) actionnable de façon uniforme, le bloc de vannes (V) duquel permet d'utiliser le vérin à double effet comme un vérin différentiel, de sorte que le premier étage duquel permet d'établir un débit volumique élevé à une faible pression hydraulique par rapport au second étage et le second étage duquel permet d'établir un faible débit volumique à une pression hydraulique élevée, **caractérisé en ce qu'**au moins un capteur de charge (D) est encore prévu, de sorte qu'une charge mécanique du poinçon (3) et du serre-flan (N ; 10) peut être détectée dans la direction d'assemblage (RF), en particulier un capteur de force ou un capteur de pression (D) de fluide hydraulique ou un capteur de pression d'air comprimé ou un capteur de courant de moteur, et
un capteur de course (W), de sorte qu'une course de poinçon et/ou une course de serre-flan peuvent être détectées, et/ou
en option une saisie de temps, de sorte que le temps d'assemblage peut être enregistré, dans lequel
le serre-flan (N ; 10) peut être déplacé au moyen du poinçon (3), de sorte que le capteur de charge (D) permet de détecter une charge mécanique du serre-flan (N ; 10) ou des composants (A), tandis que le serre-flan (N ; 10) peut être préserré contre ledit composant (A) au moins à l'aide d'au moins un premier ressort (20) moyennant le mouvement du poinçon (3), dans lequel au moins une unité de commande (K) seule, qui constitue une unité de commande à commutation autonome, qui passe d'une étape d'entraînement de l'unité d'entraînement à l'autre en fonction de la charge, de préférence en fonction de la pression du fait d'une configuration mécanique, ou au moins une unité de commande combinée au capteur de charge (D) permettent de détecter l'atteinte au moins d'un premier seuil de la charge du poinçon (3) et/ou du serre-flan (N ; 10) ou
au moins une unité de commande (K) seule, qui constitue une unité de commande à commutation autonome, qui passe d'une étape d'entraînement de l'unité d'entraînement à l'autre en fonction de la course du fait d'une configuration mécanique, ou au moins une unité de commande combinée au capteur de course (W) permettent de détecter l'atteinte au moins d'un premier seuil de la course du poinçon ou
au moins une unité de commande (K) seule, qui constitue une unité de commande à commutation autonome, qui passe d'une étape d'entraînement de l'unité d'entraînement à l'autre en fonction de la charge, de préférence en fonction de la pression, ou en fonction de la course du fait d'une configuration mécanique, ou au moins une unité de commande combinée à la saisie de temps permettent de détecter l'atteinte au moins d'un premier seuil du temps d'assemblage, suite à quoi l'unité d'entraînement (Al ; A2 ; A3 ; A4) travaillant au moins en deux étapes peut être commutée entre les étapes d'entraînement par l'unité de commande (K), qui comprend au moins une étape de déplacement et au moins une étape de mise en charge, dont l'étape de déplacement se **caractérise par** une vitesse de poinçonnage supérieure en regard de l'étape de mise en charge et l'étape de mise en charge se **caractérise par** une force de poinçonnage applicable supérieure en regard de l'étape de déplacement.

2. Dispositif d'assemblage selon la revendication 1, dans lequel une unité de commande combinée au capteur de charge permet de détecter une augmentation de charge en hausse constante, au cours de laquelle le premier seuil de la charge est défini.

3. Dispositif d'assemblage selon la revendication 2, dans lequel l'unité de commande (K) permet d'analyser l'augmentation de charge en fonction de la course de poinçon ou du temps d'assemblage.

4. Dispositif d'assemblage selon l'une des revendications précédentes, dans lequel la charge est identifiable sous la forme d'une force de poinçonnage, d'une pression hydraulique ou d'une pression pneumatique.

5. Dispositif d'assemblage selon la revendication 3, dans lequel l'unité de commande (K) combinée au capteur de charge (D) permet de détecter une variation d'une première hausse constante positive à une seconde hausse positive dans l'augmentation de charge, sachant que la première hausse est plus petite que la seconde hausse et que l'unité d'entraînement (Al ; A2 ; A3 ; A4) peut être commutée de ladite étape de déplacement au moins à ladite étape de mise en charge au moins sur la base de la progression de la hausse.

6. Dispositif d'assemblage selon l'une des revendications précédentes, dans lequel le serre-flan (N ; 10) comporte un second ressort (30), avec lequel le serre-flan (N ; 10) peut être préserré contre les composants (A) et qui présente une constante de rappel supérieure à celle du premier ressort (20).

7. Dispositif d'assemblage selon la revendication 6 combinée à la revendication 5, dans lequel la seconde hausse positive détectée est constante et repose sur l'action du second ressort (30) du serre-flan (N ; 10).

8. Dispositif d'assemblage selon l'une des revendications précédentes, qui est prévu pour servir d'appareil de pose de rivets autopoinçonneurs, qui présente un entraînement de poinçon hydraulique au moins en deux étapes sous la forme de l'unité d'entraînement (A2 ; A3) et dans lequel une vanne d'inversion (V) préréglée mécaniquement forme l'unité de commande (K) destinée à commuter l'unité d'entraînement (A2 ; A3) entre l'étape de déplacement et l'étape de mise en charge, ladite vanne faisant passer de l'étape de déplacement à l'étape de mise en charge et inversement en fonction de la pression.

9. Un procédé d'assemblage d'un dispositif d'assemblage selon l'une des revendications précédentes, dans lequel le poinçon (3) permet d'exécuter un mouvement de pose (S1) linéaire non pivotant, le serre-flan (N ; 10) permet de comprimer (S2) un ou plusieurs composants (A) dans la direction d'assemblage (R_{F}) et l'unité d'entraînement (A1 ; A2 ; A3 ; A4) travaillant au moins en deux étapes, qui permet de déplacer le poinçon (3) ainsi que le serre-flan (N ; 10), est commutée en fonction d'une force applicable par le poinçon (3) et/ou le serre-flan (N ; 10) et/ou en fonction de la course de poinçon réalisable et/ou en fonction du temps d'assemblage, dans lequel l'unité d'entraînement (Al ; A2 ; A3 ; A4) présente :
a) l'entraînement de broche (S) électrique au moins en deux étapes, dans lequel la transmission (G) ou deux broches d'un pas de filetage différent transforment un mouvement de rotation du moteur électrique (E) en un mouvement de pose linéaire du poinçon (3) par le biais d'au moins deux étages de transmission différents commutables, dans lequel le mouvement de pose linéaire respectif des étages de transmission se différencie par des courses de réglage possibles par unité de temps et/ou par une force de poinçonnage applicable et au moins le moteur électrique (E), la transmission (G) commutable et l'entraînement de broche (S) forment un module (A1) actionnable de façon uniforme, ou
b) l'entraînement de poinçon (A3) hydraulique au moins en deux étapes, doté du vérin à double effet avec une tige de piston unilatérale, du réservoir hydraulique (R), du moteur électrique (SA) associé au premier étage (P1) et au second étage de pompe (P2) hydraulique et du bloc de vannes (V), qui forment ensemble un module (A3) actionnable de façon uniforme, le premier étage (P1) duquel permet d'établir un débit volumique élevé à une faible pression hydraulique par rapport au second étage (P2) et le second étage (P2) duquel permet d'établir un faible débit volumique à une pression hydraulique élevée, ou
c) l'entraînement de poinçon (A2) hydraulique au moins en deux étapes, doté du vérin à double effet avec une tige de piston unilatérale, du réservoir hydraulique (R), du moteur électrique (SA) associé à la pompe hydraulique (P) et du bloc de vannes (V), qui forment ensemble un module (A2) actionnable de façon uniforme, le bloc de vannes (V) duquel permet d'utiliser le vérin à double effet comme un vérin différentiel, de sorte que le premier étage duquel permet d'établir un débit volumique élevé à une faible pression hydraulique par rapport au second étage et le second étage duquel permet d'établir un faible débit volumique à une pression hydraulique élevée,
**caractérisé en ce**
**qu'**au moins le capteur de charge (D) permet de détecter une charge mécanique du poinçon (3) et/ou du serre-flan (N ; 10) dans la direction d'assemblage (RF) sous la forme d'un signal de charge, en particulier un capteur de force ou un capteur de pression (D) de fluide hydraulique ou un capteur de pression d'air comprimé (S3) ou un capteur de courant de moteur, et
le capteur de course permet de détecter la course de poinçon et/ou la course de serre-flan (S4), et/ou
la saisie de temps permet d'enregistrer un temps d'assemblage (S5), dans lequel
le serre-flan (N ; 10) est déplacé (S6) au moyen du poinçon (3), tandis que le serre-flan (N ; 10) est plaqué contre ledit composant (A) au moins par au moins un premier ressort (20) moyennant le mouvement du poinçon (3), et
au moins l'unité de commande (K) seule ou combinée au capteur de charge (D) permet de détecter l'atteinte au moins d'un premier seuil de la charge du poinçon (3) (S7) et/ou du serre-flan (N ; 10) (S8) ou
au moins l'unité de commande (K) seule ou combinée au capteur de course permet de dépister l'atteinte au moins d'un premier seuil de la course du poinçon (S9) et/ou de la course du serre-flan ou
au moins l'unité de commande (K) seule ou combinée à la saisie de temps permet de dépister l'atteinte au moins d'un premier seuil du temps d'assemblage (S10),
suite à quoi l'unité d'entraînement (Al ; A2 ; A3 ; A4) travaillant au moins en deux étapes est commutée en conséquence entre les étapes d'entraînement par l'unité de commande (K), dans laquelle les étapes d'entraînement comprennent au moins une étape de déplacement et au moins une étape de mise en charge, dans laquelle l'étape de déplacement se **caractérise par** une vitesse de poinçonnage supérieure en regard de l'étape de mise en charge et l'étape de mise en charge se **caractérise par** une force de poinçonnage applicable supérieure en regard de l'étape de déplacement.

10. Procédé d'assemblage selon la revendication 9, dans lequel l'unité de commande (K) seule ou combinée au capteur de charge (D) permet de détecter une augmentation de charge, au cours de laquelle le premier seuil de la charge est défini (S3).

11. Procédé d'assemblage selon la revendication 9 ou 10, dans lequel l'unité de commande (K) seule ou combinée au capteur de charge permet d'analyser l'augmentation de charge en fonction de la course de poinçon ou du temps d'assemblage (S7, S8).

12. Procédé d'assemblage selon l'une des revendications 9 à 11, dans lequel la charge est détectée sous la forme d'une force de poinçonnage, d'une pression hydraulique, d'un courant de moteur de la pompe ou d'une pression pneumatique.

13. Procédé d'assemblage selon la revendication 11, dans lequel l'unité de commande (K) seule ou combinée au capteur de charge (D) permet de détecter une variation d'une première hausse constante positive à une seconde hausse positive dans l'augmentation de charge, sachant que la première hausse est plus petite que la seconde hausse et que l'unité d'entraînement est commutée de ladite étape de déplacement au moins à ladite étape de mise en charge au moins sur la base de la progression de la hausse.

14. Procédé d'assemblage selon l'une des revendications précédentes 10 à 14, dans lequel le serre-flan (N ; 10) comporte un second ressort (30), avec lequel le serre-flan (N ; 10) peut être préserré contre les composants (A) et qui présente une constante de rappel supérieure à celle du premier ressort (20).

15. Procédé d'assemblage selon la revendication 14 combinée à la revendication 13, dans lequel la seconde hausse positive détectée par l'unité de commande (K) est constante et repose sur l'action du second ressort (30) du serre-flan (N ; 10).

16. Procédé d'assemblage selon la revendication 9, dans lequel l'unité de commande (K) à commutation autonome est prévue, qui passe d'une étape d'entraînement de l'unité d'entraînement à l'autre en fonction de la charge, notamment en fonction de la pression, ou en fonction de la course du fait d'une configuration mécanique.

17. Procédé d'assemblage selon l'une des revendications précédentes 9 à 16, dans lequel l'entraînement de poinçon hydraulique au moins en deux étapes est commuté par une vanne d'inversion préréglée mécaniquement servant d'unité de commande (K), lorsqu'une pression hydraulique atteint un seuil de la pression de service hydraulique dans l'entraînement de poinçon hydraulique.
